# EUROPÄISCHE PATENTSCHRIFT

(11) **EP 2 922 651 B1**
(45) Veröffentlichungstag und Bekanntmachung des Hinweises auf die Patenterteilung: **01.03.2017**
(21) Anmeldenummer: 13766521.2
(22) Anmeldetag: 24.09.2013
(51) Int. Cl.: B23B 27/04, B23B 29/04

(54) **SPANABHEBENDES WERKZEUG**
CUTTING TOOL
OUTIL D'USINAGE PAR ENLÈVEMENT DE COPEAUX

(30) Priorität: 21.11.2012 DE 102012111240
(43) Veröffentlichungstag der Anmeldung: 30.09.2015
(73) Patentinhaber: Hartmetall-Werkzeugfabrik Paul Horn GmbH, 72072 Tübingen (DE)
(72) Erfinder: VOEGE, Ruediger, 72108 Rottenburg (DE)
(74) Vertreter: Witte, Weller & Partner Patentanwälte mbB
(86) Internationale Anmeldenummer: PCT/EP2013/069781
(87) Internationale Veröffentlichungsnummer: WO 2014/079607

(56) Entgegenhaltungen:
- EP-A1- 1 205 273
- JP-A- H0 871 811
- US-A1- 2006 062 640

## Beschreibung

Die vorliegende Erfindung betrifft ein spanabhebendes Werkzeug mit einem Halter und einem im Halter auswechselbar angeordneten Schneideinsatz. Des Weiteren betrifft die vorliegende Erfindung den Schneideinsatz für ein solches spanabhebendes Werkzeug sowie den Halter für dieses spanabhebende Werkzeug.

Ein solches Werkzeug ist aus der US-A-2006062640 bekannt. US-A-2006062640 offenbart ein Spanabhebendes Werkzeug mit einem Halter mit einer schlitzförmigen, kreisbogenförmigen Aufnahme mit jeweils einer, an Klemmbacken des Halters angebrachten unteren und oberen Anschlagfläche zur Aufnahme eines Schneideinsatzes und einem Schneideinsatz mit einem kreisbogenförmigen Schaft mit unterer und oberer Anlagefläche, der in der Aufnahme auswechselbar angeordnet ist, und einem an einem werkstückseitigen Ende des Schaftes angeordneten Schneidkopf mit einer Schneidkante, wobei sich die Aufnahme über einen größeren Winkelbereich erstreckt als der Schaft des Schneideinsatzes, und wobei der Schaft in der Aufnahme so gehalten wird, dass das halterseitige Ende des Schaftes von dem halterseitigen Ende der Aufnahme beabstandet ist.

Spanabhebende Werkzeuge dieser Art kommen meist bei Anwendungen zur Metallbearbeitung, insbesondere bei Fräs- oder Drehanwendungen, zum Einsatz. Spanabhebende Werkzeuge gemäß der vorliegenden Erfindung werden insbesondere zum Einstechdrehen oder Längsdrehen verwendet. Um optimale Zerspanungseigenschaften zu gewährleisten ist ein aus mechanischer Sicht stabiler Plattensitz, also eine mechanisch stabile Aufnahme des Schneideinsatzes innerhalb des Werkzeughalters, von immenser Wichtigkeit. Die verwendeten Schneideinsätze werden dazu in einer im Werkzeughalter vorgesehenen Aufnahme zwischen zwei Klemmbacken eingespannt bzw. geklemmt gehalten. Ein weiterer wichtiger Aspekt, den es zu gewährleisten gilt, ist eine einfache und schnelle Austauschbarkeit des Schneideinsatzes, da dieser aufgrund von Verschleiß häufig ausgetauscht werden muss.

Die EP 0 312 223 A1 zeigt ein Werkzeug mit einem im Wesentlichen prismatisch geformten Schneideinsatz, welcher eine konkave Oberseite und eine konvexe Unterseite besitzt. Der Schneideinsatz ist dabei zwischen einer starren unteren Klemmbacke und einer elastisch aufspreizbaren oberen Klemmbacke im Halter angeordnet. Die Klemmkraft zur Einspannung des Schneideinsatzes zwischen diesen beiden Klemmbacken wird durch eine Klemmschraube erzeugt. Um den Schneideinsatz bei einem Austausch vom Halter lösen zu können, muss daher die Klemmschraube manuell gelöst und dann wiederum manuell angezogen werden, sobald ein neuer Schneideinsatz in den Halter eingesetzt ist. Dies ist nicht nur umständlich sondern auch zeitaufwendig. Insbesondere in engen Einbausituationen, welche in Werkzeugmaschinen häufig auftreten, ist dies häufig nur sehr schwierig, teilweise auch gar nicht möglich, ohne den Halter selbst aus seiner Einspannung zu entnehmen.

Die EP 1 205 273 A1 zeigt ein weiteres spanabhebendes Werkzeug, welches aus einem scheibenförmigen oder klingenförmigen Grundkörper mit mindestens einer Ausnehmung zur Aufnahme eines Schneideinsatzes besteht. Der Schneideinsatz wird durch einen elastisch aufspreizbaren Klemmarm, welcher die obere Anlagefläche der Ausnehmung bildet, auswechselbar festgeklemmt. Schneideinsatz und Ausnehmung sind an ihren gegenseitigen Anlageflächen formschlüssig ausgeführt. Hierdurch wird ein sogenanntes "Selbstklemmprinzip" realisiert. Eine Klemmschraube, wie diese gemäß der EP 0 312 223 A1 notwendig ist, kann dadurch entfallen. Um den Schneideinsatz austauschen zu können, muss der obere Klemmarm hierbei manuell aufgespreizt werden. Es hat sich gezeigt, dass ein nachhaltig stabiler Plattensitz in einem solchen Fall nicht ausnahmslos gewährleistet werden kann. Ein häufiges Aufspreizen des oberen Klemmarmes kann mitunter zu Materialermüdungen führen, wodurch die Klemmkraft zwischen Halter und Schneideinsatz nicht dauerhaft gewährleistet wäre.

Aufgrund der zwingend notwendigen elastischen Eigenschaften der oberen Klemmbacken ist sowohl bei dem aus der EP 0 312 223 A1 als auch bei dem aus der EP 1 205 273 A1 bekannten Werkzeug jeweils ein Dehnungsschlitz notwendig, welcher in das halterseitige Ende der Schneideinsatzaufnahme mündet. Ohne diese Dehnungsschlitze wären die oberen Klemmbacken jeweils starr ausgestaltet, so dass diese sich nicht mehr oder nur mit immensem Kraftaufwand aufspreizen ließen. Wenngleich solche Dehnungsschlitze nicht grundsätzlich als nachteilig zu betrachten sind, so vergrößert sich dadurch dennoch der am Halter vorzusehende Bauraum, weshalb kompakte Werkzeuge bzw. kompakte Halter in einer solchen Ausgestaltung nur sehr schwierig zu gewährleisten sind. Das Vorsehen eines solchen Dehnungsschlitzes erfordert im Übrigen einen weiteren Bearbeitungsschritt bei der Herstellung eines solchen Halters. Das Fertigen solcher Dehnungsschlitze kann mitunter relativ komplex sein. Im Übrigen muss dabei auch darauf geachtet werden, dass die gesamthafte Stabilität des Klemmkopfes trotz des Dehnungsschlitzes erhalten bleibt.

Des Weiteren sei darauf hingewiesen, dass bei beiden oben genannten aus dem Stand der Technik bekannten Werkzeugen der Schneideinsatz jeweils mit seiner halterseitigen Stirnseite am Werkzeughalter anliegt. Hierzu sind bei beiden Werkzeugen Anlagefläche im Grund der Schneideinsatzaufnahme vorgesehen. Bei dem aus der EP 0 312 223 A1 bekannten Werkzeug ist hierzu sogar ein extra Anschlagelement im Grund der Schneideinsatzaufnahme angeordnet. In beiden Fällen lässt sich durch einen derartigen Anschlag bzw. durch eine derartige Anlage eine ausreichend exakte Spitzenhöhe nur über sehr enge Fertigungstoleranzen realisieren.

Der Erfindung liegt die Aufgabe zugrunde, ein spanabhebendes Werkzeug der eingangs genannten Art bereitzustellen, welches sich im Gegensatz zum Stand der Technik durch eine kompakte Bauart auszeichnet und bei dem sich der Schneideinsatz dennoch einfach austauschen lässt. Dabei soll insbesondere ein kompakter und dennoch mechanisch sehr stabiler Plattensitz realisiert werden.

Diese Aufgabe wird durch ein spanabhebendes Werkzeug gelöst mit einem Halter mit einer schlitzförmigen, kreisbogenförmigen Aufnahme mit jeweils einer, an starren Klemmbacken des Halters angebrachten unteren und oberen Anschlagfläche zur Aufnahme eines Schneideinsatzes und einem Schneideinsatz mit einem kreisbogenförmigen Schaft mit unterer und oberer Anlagefläche, der in der Aufnahme auswechselbar angeordnet ist, und einem an einem werkstückseitigen Ende des Schaftes angeordneten Schneidkopf mit einer Schneidkante, wobei sich die kreisbogenförmige Aufnahme und der kreisbogenförmige Schaft, gemessen an der unteren Anschlagfläche der Aufnahme bzw. der unteren Anlagefläche des Schneideinsatzes, jeweils über mindestens 90° erstrecken, wobei sich die Aufnahme über einen größeren Winkelbereich erstreckt als der Schaft des Schneideinsatzes, und wobei der Schaft in der Aufnahme so gehalten wird, dass das halterseitige Ende des Schaftes von dem halterseitigen Ende der Aufnahme beabstandet ist.

Gemäß einem weiteren Aspekt der vorliegenden Erfindung wird diese Aufgabe durch einen Schneideinsatz für ein solches spanabhebendes Werkzeug mit Halter und Schneideinsatz gelöst, wobei der Halter eine schlitzförmige, kreisbogenförmige Aufnahme mit jeweils einer, an starren Klemmbacken des Halters angebrachten unteren und oberen Anschlagfläche zur Aufnahme des Schneideinsatzes aufweist, wobei der Schneideinsatz einen kreisbogenförmigen Schaft mit einer unteren und einer oberen Anlagefläche aufweist, zur auswechselbaren Anordnung in der Aufnahme ausgestaltet ist, und einen an einem werkstückseitigen Ende des Schaftes angeordneten Schneidkopf mit einer Schneidkante aufweist, sich der kreisbogenförmige Schaft, gemessen an der der unteren Anlagefläche des Schneideinsatzes, über mindestens 90° erstreckt, der Schaft des Schneideinsatzes über einen kleineren Winkelbereich erstreckt als die Aufnahme des Halters, und wobei der Schaft dazu ausgestaltet ist, dass er in der Aufnahme so gehalten wird, dass das halterseitige Ende des Schaftes von dem halterseitigen Ende der Aufnahme beabstandet ist.

Ferner wir oben genannte Aufgabe gemäß einem weiteren Aspekt durch einen Halter für ein spanabhebendes Werkzeug gelöst, wobei der Halter eine schlitzförmige, kreisbogenförmige Aufnahme aufweist mit jeweils einer, an starren Klemmbacken des Halters angebrachten unteren und oberen Anschlagfläche zur Aufnahme eines Schneideinsatzes, welcher einen kreisbogenförmigen Schaft mit einer unteren und einer oberen Anlagefläche aufweist und mit einem an einem werkstückseitigen Ende des Schaftes angeordneten Schneidkopf mit einer Schneidkante ausgestattet ist, wobei sich die kreisbogenförmige Aufnahme, gemessen an der unteren Anschlag-fläche der Aufnahme, über mindestens 90° erstreckt, wobei sich die Aufnahme über einen größeren Winkelbereich erstreckt als der Schaft des Schneideinsatzes, und wobei der Halter dazu ausgestaltet ist, dass der Schaft in der Aufnahme so gehalten wird, dass das halterseitige Ende des Schaftes von dem halterseitigen Ende der Aufnahme beabstandet ist.

Die oben genannte Aufgabe wird dadurch vollständig gelöst.

Gemäß der vorliegenden Erfindung ist also sowohl der Schaft des Schneideinsatzes als auch die Aufnahme am Werkzeughalter kreisbogenförmig ausgeführt. Die am Werkzeughalter vorgesehenen Klemmbacken sind dabei starr ausgestaltet, so dass die Klemmbacken zum Einsetzen bzw. zum Austauschen des Schneideinsatzes im Gegensatz zum Stand der Technik nicht aufgespreizt werden müssen. Beim Einsetzen wird der Schneideinsatz zwischen diesen starren Klemmbacken lediglich eingeschoben bzw. aufgrund der Kreisbogenform in die Aufnahme des Halters sozusagen eingedreht bzw. eingeschwenkt. Hierbei entsteht eine Selbstklemmung des Schneideinsatzes zwischen den starren Klemmbacken. Der Schneideinsatz liegt dann mit seinen unteren und oberen Anlageflächen an den korrespondierenden unteren und oberen Anschlagflächen der Halteraufnahme an.

Aufgrund der Tatsache, dass sich die Aufnahme über einen größeren Winkelbereich erstreckt als der Schaft des Schneideinsatzes, ist das halterseitige Ende des Schaftes in montiertem Zustand von dem halterseitigen Ende der Aufnahme beabstandet. An der dem werkstückseitigen Ende des Schneideinsatzes bzw. des Schaftes gegenüberliegenden halterseitigen Stirnseite hat der Schneideinsatz somit keinen Kontakt zum Halter. Ein an dieser Stelle vorgesehener Anschlag ist bei dem erfindungsgemäßen Werkzeug nicht vorgesehen.

Im Gegensatz zu den oben erwähnten Werkzeugen aus dem Stand der Technik ergeben sich also folgende Unterschiede und folgende daraus resultierende Vorteile des erfindungsgemäßen Werkzeugs: Die Klemmbacken des erfindungsgemäßen Halters sind im Wesentlichen starr ausgestaltet. Insbesondere ist auch die obere Klemmbacke hier starr ausgestaltet. Dies führt nicht nur zu einem mechanisch stabileren Plattensitz. Ein extra Klemmmittel, wie beispielsweise eine Klemmschraube, kann dadurch entfallen. Auch ein Aufspreizen der oberen Klemmbacke zum Einsetzen des Schneideinsatzes ist nicht notwendig. Dieser wird lediglich bis zum Klemmpunkt in die Aufnahme des Werkzeughalters eingeschoben. Ein Einsetzen oder auch ein Austausch des Schneideinsatzes ist dadurch wesentlich vereinfacht.

Aus der im Wesentlichen starren Ausführung der Klemmbacken folgt auch, dass vorliegend keine Dehnungsschlitze notwendig sind, welche zusätzlich im Halter vorgesehen werden müssten. Dies vereinfacht die Fertigung des Halters. Der wesentliche Vorteil besteht jedoch darin, dass sich dadurch die Größe des Klemmkopfes immens reduzieren lässt. Letztendlich ermöglicht dies eine sehr kompakte Bauweise des Klemmkopfes bzw. des Halters und damit auch des gesamten Werkzeugs. Auch der Materialaufwand wird dadurch reduziert. Es ist einleuchtend, dass dies Produktionskosten spart.

Durch die vorgesehene formschlüssige Anlage zwischen den unteren und oberen Anlageflächen des Schneideinsatzes und den unteren und oberen Anschlagflächen der Schneideinsatzaufnahme wird ein exakt definierter Plattensitz auch ohne einen stirnseitigen Anschlag (an der halterseitigen Stirnseite des Schneideinsatzschaftes) erreicht.

Es versteht sich, dass unter den oben genannten "starren Klemmbacken" im Wesentlichen starre Klemmbacken verstanden werden. Selbstverständlich ist aufgrund der natürlich auftretenden Elastizität des Haltermaterials (beispielsweise Stahl) dennoch eine geringe Elastizität der beiden Klemmbacken zueinander vorhanden. Unter "starren Klemmbacken" sollen hier Klemmbacken verstanden werden, welche nicht dazu vorgesehen sind, diese mit geringem bzw. angemessenem Kraftaufwand aufzuspreizen, da dies, wie oben bereits erwähnt, vorliegend zum Einsetzen bzw. Austauschen des Schneideinsatzes nicht notwendig ist.

Gemäß einer bevorzugten Ausgestaltung der vorliegenden Erfindung weisen die untere Anschlagfläche und die untere Anlagefläche einen gleichgroßen ersten Krümmungsradius auf. Ebenso weisen die obere Anschlagfläche und die obere Anlagefläche vorzugsweise einen gleichgroßen zweiten Krümmungsradius auf.

Korrespondierende Anlage- bzw. Anschlagflächen des Schneideinsatzes und des Halters haben daher zumindest stellenweise eine gleiche Krümmung. Die Begriffe "erster Krümmungsradius" und "zweiter Krümmungsradius" beziehen sich nicht auf deren Anzahl, sondern dienen lediglich zur begrifflichen Unterscheidung der verschiedenen Krümmungsradien. Es versteht sich, dass der erste Krümmungsradius der unteren Anlagefläche bzw. der unteren Anschlagfläche größer ist als der zweite Krümmungsradius der oberen Anlagefläche bzw. der oberen Anschlagfläche.

Die vorgesehenen gleichgroßen Krümmungsradien am Halter und am Schaft des Schneideinsatzes haben insbesondere den Zweck, dass zwischen den Anlageflächen des Schneideinsatzschaftes und den Anschlagflächen des Halters zumindest stellenweise ein Formschluss entsteht. Diese formschlüssige Anlage ermöglicht, wie oben bereits erwähnt, einen festen und mechanisch stabilen Plattensitz. Ein unabsichtliches Herauslösen des Schneideinsatzes während der Bearbeitung ist nahezu unmöglich. Durch die vorgesehene kreisbogenförmige Ausgestaltung des Schneideinsatzes und durch die beabsichtigte Art der Klemmung innerhalb des Halters wird auch ein unabsichtliches Herauslösen des Schneideinsatzes während einer Rückstellbewegung des Werkzeugs vom Werkstück wirksam verhindert. Es sei noch erwähnt, dass die bogenförmige Ausgestaltung des Schneideinsatzes derart ausgeführt ist, dass die obere Anlagefläche des Schneideinsatzschaftes konvex geformt und die untere Anlagefläche des Schneideinsatzschaftes konkav geformt ist.

Gemäß einer weiteren Ausgestaltung der vorliegenden Erfindung ist wenigstens eine Anschlagfläche der Aufnahme im Bereich des halterseitigen Endes der Aufnahme gerade ausgestaltet. Gemäß dieser Ausgestaltung ist auch wenigstens eine Anlagefläche des Schaftes im Bereich des halterseitigen Endes des Schaftes gerade ausgestaltet. Diese gerade ausgestalteten Anschlag- bzw. Anlageflächen korrespondieren gemäß dieser Variante miteinander. Beide Flächen, sowohl die gerade Anschlagfläche der Aufnahme als auch die gerade Anlagefläche des Schneideinsatzschaftes, sind im Bereich des halterseitigen Endes, also im Bereich des hinteren Endes der Aufnahme bzw. des Schaftes angeordnet.

Vorzugsweise ist jeweils ein Teil der oberen Anschlagfläche des Halters und jeweils ein Teil der oberen Anlagefläche des Schneideinsatzes gerade ausgestaltet. Unter "gerade" wird vorliegend ein ungekrümmter Teil der Anlage- bzw. Anschlagflächen verstanden, welche von der Kreisbogenform abweicht. Vorzugsweise ist also ein erster Teilabschnitt der oberen Anschlagfläche des Halters, welcher sich im Bereich des werkstückseitigen Endes befindet, kreisbogenförmig (gekrümmt) ausgestaltet und ein zweiter Teilabschnitt, der am Halter vorgesehenen oberen Anschlagfläche, welcher sich im Bereich des halterseitigen Endes der Aufnahme befindet, geradlinig, also ungekrümmt ausgestaltet. Korrespondierend dazu ist auch der Schneideinsatz in einem ersten Teilabschnitt der oberen Anlagefläche (im Bereich der werkstückseitigen Endes) gekrümmt bzw. kreisbogenförmig ausgestaltet und in einem zweiten Teilabschnitt der oberen Anlagefläche (im Bereich des halterseitigen Endes) geradlinig bzw. ungekrümmt ausgestaltet.

Beim Einsetzen des Schneideinsatzes in den Halter wird der Schneideinsatzes in die dafür am Halter vorgesehene Aufnahme soweit eingeschoben bzw. eingeschwenkt bis die gerade bzw. ungekrümmt ausgestalteten Teilabschnitte der oberen Anlagefläche und der oberen Anschlagfläche aneinander anliegen. Hierdurch wird eine im Wesentlichen plane Flächenanlage erreicht. Dies erzeugt einen exakt definierten Plattensitz und, damit verbunden, auch eine exakt definierte Spitzenhöhe der Schneidkante. Ein Anschlag auf der der werkstückseitigen Stirnseite des Schneideinsatzes gegenüberliegenden halterseitigen Stirnseite (wie dies bei den oben erwähnten Werkzeugen aus dem Stand der Technik der Fall ist) ist hier also nicht beabsichtigt.

Gemäß einer weiteren bevorzugten Ausgestaltung verjüngt sich die Aufnahme des Halters im Bereich des halterseitigen Endes der Aufnahme. Ebenso verjüngt sich vorzugsweise der Schaft im Bereich des halterseitigen Endes des Schaftes.

Eine derartige Verjüngung der Aufnahme sowie des Schneideinsatzschaftes im Bereich des halterseitigen Endes wird vorzugsweise durch die oben erwähnten geraden Teilabschnitte der oberen Anlagefläche und der oberen Anschlagfläche erreicht. Im selben Winkelbereich ist nämlich sowohl die an der unteren Klemmbacke vorgesehene untere Anschlagfläche als auch die am Schaft des Schneideinsatzes vorgesehene untere Anlagefläche weiterhin gekrümmt bzw. kreisbogenförmig ausgestaltet. Die in diesem Bereich kreisbogenförmige bzw. gekrümmte Ausgestaltung der unteren Anlage und die im selben Bereich demgegenüber gerade bzw. ungekrümmte Ausgestaltung der oberen Anlage resultiert somit in einer Verjüngung des Schneideinsatzes als auch in einer Verjüngung der Aufnahme im Bereich des halterseitigen Endes. Aufgrund dieser Verjüngung lässt sich der Schneideinsatz relativ einfach in den Halter einsetzen, wobei die zwischen Halter und Schneideinsatz erzeugte Klemmkraft bis zum Erreichen der Endposition, bei der die gerade ausgestalteten oberen Anlage- bzw. Anschlagflächen aneinander anliegen, zunimmt.

Durch das Einschieben bzw. Einschwenken des Schneideinsatzes in die Aufnahme des Halters erfolgt also eine Klemmung ohne stirnseitigen Anschlag. Der Schneideinsatz wird dabei in der Aufnahme des Halters sozusagen durch Verklemmung bzw. Verkeilung mechanisch gesichert. Selbst wenn die Klemmkraft der Klemmbacken aufgrund von Abnutzung nachlassen sollte, so ist dennoch eine ausreichende Spannkraft vorhanden, welche einen mechanisch stabilen und sicheren Plattensitz garantiert. In diesem Fall würde der Schneideinsatz nämlich lediglich geringfügig weiter in die Aufnahme hineingepresst werden (möglich, da kein stirnseitiger Anschlag vorhanden). Ein dadurch entstehender geringfügiger Höhenversatz der Schneidkante ist nahezu vernachlässigbar.

Gemäß einer weiteren Ausgestaltung der vorliegenden Erfindung weisen die Klemmbacken des Halters eine an der unteren Anlagefläche des Schneideinsatzes anliegende untere Klemmbacke und eine an der oberen Anlagefläche des Schneideinsatzes anliegende obere Klemmbacke auf, wobei am werkstückseitigen Ende der unteren Klemmbacke an die Aufnahme angrenzend ein Vorsprung vorgesehen ist, welcher eine parallel zur Schneidkante verlaufende Auflagefläche als Anschlag für den Schneidkopf aufweist.

Gemäß dieser Ausgestaltung ist eine formschlüssige Anlage also nicht am halterseitigen Ende, sondern am werkstückseitigen Ende der Aufnahme vorgesehen. Eine als mechanischer Anschlag dienende Auflagefläche ist dazu am werkstückseitigen Ende der Aufnahme in Verlängerung der unteren Anschlagfläche des Halters vorgesehen. Bei dieser Auflagefläche handelt es sich vorzugsweise um eine planare Fläche. Dementsprechend weist der Schneideinsatz eine dazu korrespondierende Gegenanschlagfläche auf, welche am werkstückseitigen Ende des Schneideinsatzschaftes an die untere Anlagefläche angrenzend angeordnet ist. Diese Gegenanschlagfläche verläuft vorzugsweise parallel zu der Schneidkante des Schneideinsatzes. Sie ist sozusagen direkt unterhalb der Schneidkante angeordnet.

Auch bei dieser Ausgestaltung wird in montiertem Zustand eine formschlüssige Anlage zwischen der im vorderen Bereich der Halteraufnahme angeordneten Auflagefläche und der unterhalb der Schneidkante am Schaft des Schneideinsatzes angeordneten Gegenanschlagfläche erreicht. In der Endposition liegen diese beiden Flächen plan einander an. Ein extra Anschlag auf der werkstückseitigen Stirnseite des Schneideinsatzes ist auch in dieser Ausgestaltung nicht notwendig.

Ferner ist es gemäß einer weiteren Ausgestaltung der vorliegenden Erfindung vorgesehen, dass der erste Krümmungsradius der unteren Anschlagfläche und der erste Krümmungsradius der unteren Anlagefläche unterschiedliche Mittelpunkte aufweisen und/oder dass der zweiten Krümmungsradius der oberen Anschlagfläche und der zweite Krümmungsradius der oberen Anlagefläche unterschiedliche Mittelpunkte aufweisen.

Wie oben bereits erwähnt, ist der erste Krümmungsradius der unteren Anschlagfläche und der erste Krümmungsradius der unteren Anlagefläche vorzugsweise gleich groß ausgestaltet. Ebenso ist der zweite Krümmungsradius der oberen Anschlagfläche und der zweite Krümmungsradius der oberen Anlagefläche vorzugsweise gleich groß ausgestaltet. Durch einen geringen Versatz der Krümmungs- bzw. Radienzentren wird gemäß dieser Ausgestaltung eine zusätzliche Verklemmung bzw. Verkeilung des Schneideinsatzes innerhalb der Halteraufnahme erreicht. Die Krümmungs- bzw. Radienzentren sind dabei vorzugsweise nur um wenige Hundertstel zueinander versetzt. Um eine nachhaltig stabile Verklemmung zu erreichen, reicht dies bereits aus. Im Übrigen sollte der Versatz zwischen den Mittelpunkten der Krümmungsradien auch nicht allzu groß sein, da sich sonst der Schneideinsatz nicht mehr oder nur mit sehr großem Kraftaufwand zwischen den starren Klemmbacken des Halters einführen ließe.

Gemäß einer weiteren Ausgestaltung ist es vorgesehen, dass der erste Krümmungsradius der unteren Anschlagfläche und der zweite Krümmungsradius der oberen Anschlagfläche unterschiedliche Mittelpunkte aufweisen und/oder dass der erste Krümmungsradius der unteren Anlagefläche und der zweite Krümmungsradius der oberen Anlagefläche unterschiedliche Mittelpunkte aufweisen.

Vorzugsweise sind also auch die Mittelpunkte der Krümmungsradien der beiden am Halter vorgesehenen Anschlagflächen zueinander versetzt. Ebenso ist dieser Mittelpunktversatz auch zwischen den Krümmungsradien der am Schneideinsatz vorgesehenen unteren und oberen Anlageflächen vorgesehen. Der Versatz der Radienzentren der beiden Anschlagflächen zueinander und der Versatz der Radienzentren der beiden Anlageflächen zueinander ist dabei vorzugsweise genau entgegengesetzt, was zu einer zusätzlichen Erhöhung der Klemmkraft zwischen Schneideinsatz und Halteaufnahme führt.

Je weiter der Schneideinsatz also in die Halteaufnahme eingeschoben wird, desto mehr erhöht sich die Klemmkraft zwischen diesen bis diese vollständig ineinander verkeilt sind. Als Endanschlag dient dabei der oben bereits erwähnte mechanische Anschlag zwischen der unterhalb der Schneidkante vorgesehenen Gegenanschlagfläche des Schneideinsatzes und der am werkstückseitigen Ende der unteren Klemmbacke vorgesehenen Auflagefläche.

Gemäß einer weiteren bevorzugten Ausgestaltung der vorliegenden Erfindung ist der Schneidkopf in mindestens einer Richtung quer zur Einführungsrichtung des Schaftes breiter ausgestaltet als die Größe der Öffnung der Aufnahme in dieser Richtung.

Dies hat im Wesentlichen den Zweck, dass Kollisionen zwischen dem Werkstück und dem vorderen Teil des Halters vermieden werden. Insbesondere beim Einstechdrehen sollte das Werkstück lediglich mit der Schneidkante des Schneideinsatzes bearbeitet werden und der Halter freilaufen. Sofern der Schneidkopf, wie oben beschrieben, breiter ausgestaltet ist als die am Halter vorgesehen Aufnahme ist eine unerwünschte Kollision zwischen Werkstück und Halter nahezu unmöglich.

In einer weiteren Ausgestaltung ist es vorgesehen, dass die untere Anschlagfläche und die untere Anlagefläche ein korrespondierendes Querschnittprofil aufweisen und/oder dass die obere Anschlagfläche und die obere Anlagefläche ein korrespondierendes Querschnittprofil aufweisen.

Die oberen und unteren Anlage- und Anschlagflächen haben vorzugsweise ein V-förmiges Querschnittsprofil. Die obere Anlagefläche des Schneideinsatzschaftes hat dabei vorzugsweise ein konvexes V-förmiges Querschnittsprofil und die obere Anschlagfläche des Werkzeughalters korrespondierend dazu ein konkaves V-förmiges Querschnittsprofil. Ebenso ist dies auch an der unteren Anlagefläche des Schneideinsatzes und der unteren Anschlagfläche des Werkzeughalters vorgesehen. Genauso gut lässt sich dies aber auch umkehren, so dass alternativ dazu die beiden Anlageflächen des Schneideinsatzschaftes ein konkaves V-förmiges Querschnittsprofil aufweisen und die beiden Anschlagflächen des Werkzeughalters korrespondierend dazu ein konvexes V-förmiges Querschnittsprofil haben. Ebenso kann die obere Anlagefläche des Schneideinsatzschaftes ein konkaves V-förmiges Querschnittsprofil und die untere Anlagefläche des Schneideinsatzschaftes ein konvexes V-förmiges Querschnittsprofil aufweisen, wobei die obere und untere Anschlagfläche des Werkzeughalters dazu korrespondierende Querschnitte aufweisen. Jede Anlagefläche am Schneideinsatz weist also vorzugsweise zwei quer zueinander angeordnete Flanken auf, welche mit dem an der jeweiligen Anschlagfläche des Halters vorgesehenen, quer zueinander angeordneten Flanken korrespondieren.

Selbstverständlich sind auch andere Querschnittsprofile, also bspw. andere prismatische Querschnitte der Anlage - bzw. Anschlagflächen möglich. V-förmige Anlage bzw. Anschlagflächen haben den Vorteil, dass der Schneideinsatz in der Aufnahme gegen seitlich auftretende Kräfte gesichert ist und dementsprechend nicht seitlich, also parallel zur Schneidkante, aus dem Werkzeughalter hinausrutschen kann.

Vorzugsweise steht der Schaft seitlich an wenigstens einer Seite über die Aufnahme über und weist dort zumindest bereichsweise einen breiteren Querschnitt auf als die Aufnahme. In der Praxis steht der Schaft des Schneideinsatzes vorzugsweise auf beiden Seiten seitlich über die Aufnahme über. Dies hat wiederum den Zweck, unerwünschte Kollisionen des Werkstücks mit dem Halter selbst zu vermeiden.

Ferner ist es gemäß einer weiteren Ausgestaltung bevorzugt vorgesehen, dass am halterseitigen Ende der Aufnahme eine erste Bohrung zur Einführung eines ersten Stiftes eines Montagehebels und im Halter eine zweite Bohrung zur Einführung eines zweiten Stiftes des Montagehebels vorgesehen ist.

Zum Montieren bzw. Demontieren des Schneideinsatzes lässt sich ein relativ einfach ausgestalteter Montagehebel verwenden. Dieser wird lediglich dazu benötigt, den Schneideinsatz bei der Montage bis zum Anschlag im Halter festzuklemmen bzw. diese Klemmkraft zwischen Halter und Schneideinsatz bei der Demontage zu lösen. Die oben beschriebenen Bohrungen dienen dabei als Eingriffsstellen, in welche die am Montagehebel vorgesehenen Querstifte eingreifen können. Durch eine Drehbewegung des Montagehebels um die im Halter vorgesehene zweite Bohrung lässt sich der Schneideinsatz, wie in den nachfolgenden Figuren gezeigt, auf einfache Weise vom Halter lösen bzw. in diesem festklemmen.

Gemäß einer weiteren Ausgestaltung weist die untere Anlagefläche des kreisbogenförmigen Schafts einen ersten Anlageabschnitt auf, der sich über einen ersten Winkelbereich des kreisbogenförmigen Schafts erstreckt und einen ersten Krümmungsradius aufweist. Ferner weist die untere Anlagefläche des kreisbogenförmigen Schafts einen zweiten Anlageabschnitt auf, der sich über einen zweiten Winkelbereich des kreisbogenförmigen Schafts erstreckt und einen zweiten Krümmungsradius aufweist. Der zweite Krümmungsradius ist ungleich dem ersten Krümmungsradius. Zudem haben der erste Krümmungsradius des ersten Anlageabschnitts und der zweite Krümmungsradius des zweiten Anlageabschnitts unterschiedliche Mittelpunkte. Die vorliegenden Abschnitte der unteren Anlagefläche werden vorliegend als Anlageabschnitte bezeichnet. Diese Stellen kreisbogenförmige Segmente bzw. Teile der unteren Anlagefläche dar.

In dieser Ausgestaltung wird die Klemmung zwischen dem Schneideinsatz und dem Werkzeughalter gegenüber den oben bereits erwähnten Varianten also auf eine nochmals andere Art und Weise erreicht. Hier wird eine zusätzliche Klemmwirkung insbesondere dadurch erreicht, dass entlang des Umfangs der unteren Anlagefläche des Schneideinsatzes unterschiedliche Krümmungen vorgesehen sind. Der erste Abschnitt (erste Anlageabschnitt) hat vorzugsweise eine geringere Krümmung als der zweite Abschnitt (zweite Anlageabschnitt). Dementsprechend ist der erste Krümmungsradius vorzugsweise größer als der zweite Krümmungsradius. Der erste Abschnitt bildet dabei den vorderen Bereich des Schneideinsatzschaftes, wohingegen der zweite Abschnitt den hinteren Bereich des Schneideinsatzschaftes bildet. Der zweite Abschnitt hat also einen geringeren Abstand vom halterseitigen Ende des Schaftes als der erste Abschnitt.

Der Schneideinsatzschaft verjüngt sich somit in dessen hinteren Bereich quasi keilförmig. Beim Einschieben bzw. Eindrehen des Schneideinsatzes in die kreisbogenförmige Aufnahme des Werkzeughalters vergrößert sich also die aufgrund dieser Keilwirkung entstehende Klemmkraft stetig mit zunehmendem Eindrehen bzw. Einschieben bis zum Erreichen der finalen Position des Schneideinsatzes. Dabei ist wichtig zu beachten, dass die gekrümmten Abschnitte (erster und zweiter Anlageabschnitt) der unteren Anlagefläche unterschiedliche Krümmungsmittelpunkte aufweisen, also nicht konzentrisch zueinander sind. Dieser Mittelpunktversatz erlaubt es, die beiden Krümmungsradien von noch unterschiedlicher Größe auszugestalten. Hierdurch wird die beschriebene Keilwirkung noch weiter verbessert.

Vorzugsweise geht der erste Anlageabschnitt direkt in den zweiten Anlageabschnitt über. Der Übergang zwischen dem ersten und dem zweiten Abschnitt erfolgt vorzugsweise im Bereich der Scheitellinie der unteren Anlagefläche, also an deren tiefstem Punkt. Dieser Übergang zwischen dem ersten Abschnitt und dem zweiten Abschnitt ist vorzugsweise ein tangentialer Übergang, so dass es hier zu keinerlei Unstetigkeiten an der unteren Anlagefläche des Schneideinsatzschaftes kommt.

Entsprechend der am Schneideinsatzschaft vorgesehenen unteren Anlagefläche ist gemäß dieser Ausgestaltung auch die untere Anschlagfläche der Aufnahme des Werkzeughalters vorzugsweise in zumindest zwei Abschnitte unterteilt. Die untere Anschlagfläche der Aufnahme weist vorzugsweise einen ersten Abschnitt (bezeichnet als erster Anschlagabschnitt) auf, der sich über einen ersten Winkelbereich der kreisbogenförmigen Aufnahme erstreckt. Ebenso weist die untere Anschlagfläche auch einen zweiten Abschnitt (bezeichnet als zweiter Anschlagabschnitt) auf, der sich über einen zweiten Winkelbereich der kreisbogenförmigen Aufnahme erstreckt und einen zweiten Krümmungsradius aufweist. Der zweite Krümmungsradius unterscheidet sich von dem ersten Krümmungsradius. Auch hier haben der erste Krümmungsradius des ersten Anschlagabschnitts und der zweite Krümmungsradius des zweiten Anschlagabschnitts unterschiedliche Mittelpunkte.

Es sei erwähnt, dass der Begriff Anschlagabschnitt vorliegend ein Teilsegment der unteren Anschlagfläche der Aufnahme bezeichnet. Zwar handelt es sich bei diesen Abschnitten ebenfalls um Anlageabschnitte. Der Begriff Anschlagabschnitt wird vorliegend jedoch im Bezug auf die untere Anschlagfläche der Aufnahme verwendet, um diese Abschnitte von den an der Unterseite des Schneideinsatzschafts vorgesehenen Anlageabschnitte sprachlich zu differenzieren.

Im Gegensatz zu den beiden am Schneideinsatzschaft vorgesehenen Anlageabschnitten gehen die entsprechend an der Aufnahme des Werkzeughalters vorgesehenen zwei Anschlagabschnitte nicht direkt ineinander über. Vorzugsweise ist der an der Aufnahme des Werkzeughalters vorgesehene erste Anschlagabschnitt durch eine in der unteren Anschlagfläche vorgesehene Aussparung von dem zweiten Anschlagabschnitt getrennt. Eine solche Aussparung verhindert einen direkten Kontakt zwischen dem Schneideinsatz und der Aufnahme an deren jeweiligem untersten Punkt bzw. an deren Scheitelpunkten. Ein Kontakt an dieser Stelle wäre im Zuge eines mechanisch exakt definierten Plattensitzes eher von Nachteil. Durch die an dieser Stelle der Aufnahme vorgesehene Aussparung kann der Schneideinsatz ähnlich wie bei einer Drei-Punkt-Auflage im montierten Zustand entlang dreier definierter Abschnitte am Werkzeughalter anliegen. Demzufolge liegt der Schneideinsatz im montierten Zustand mit seiner oberen Anlagefläche an seiner Oberseite an der entsprechenden oberen Anschlagfläche des Werkzeughalters an und berührt auf seiner Unterseite die untere Anschlagfläche des Werkzeughalters im vorderen Bereich entlang des ersten Anlageabschnitts sowie im hinteren Bereich entlang des zweiten Anlageabschnitts der unteren Anlagefläche. Am Übergang zwischen dem ersten Anlageabschnitt und dem zweiten Anlageabschnitt der unteren Anlagefläche des Schneideinsatzschaftes (also in dessen mittlerem Bereich) ist jedoch kein Kontakt zwischen der unteren Anschlagfläche der Aufnahme und der unteren Anlagefläche des Schneideinsatzschaftes vorgesehen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht des erfindungsgemäßen Werkzeugs,
- Fig. 2: eine Seitenansicht (Fig. 2A) sowie eine Detailansicht (Fig. 2B) einer ersten Ausführungsform des erfindungsgemäßen Werkzeugs mit einem darin eingesetzten Schneideinsatz,
- Fig. 3: verschiedene Ansichten des erfindungsgemäßen Schneideinsatzes gemäß der ersten Ausführungsform,
- Fig. 4: verschiedene Ansichten des erfindungsgemäßen Halters (ohne darin eingesetzten Schneideinsatz) gemäß der ersten Ausführungsform,
- Fig. 5: eine Seitenansicht (Fig. 5A) und eine Detailansicht (Fig. 5B) einer zweiten Ausführungsform des erfindungsgemäßen Werkzeugs mit dem darin eingesetzten Schneideinsatz,
- Fig. 6: verschiedene Ansichten des Schneideinsatzes gemäß der zweiten Ausführungsform,
- Fig. 7: verschiedene Ansichten des erfindungsgemäßen Halters (ohne darin eingesetzten Schneideinsatz) gemäß der zweiten Ausführungsform,
- Fig. 8: eine Seitenansicht (Fig. 8A) und eine Detailansicht (Fig. 8B) einer dritten Ausführungsform des erfindungsgemäßen Werkzeugs mit dem darin eingesetzten Schneideinsatz,
- Fig. 9: verschiedene Ansichten des Schneideinsatzes gemäß der dritten Ausführungsform,
- Fig. 10: verschiedene Ansichten des erfindungsgemäßen Halters (ohne darin eingesetzten Schneideinsatz) gemäß der dritten Ausführungsform,
- Fig. 11: ein Montagehebel, welcher zur Montage und Demontage des Schneideinsatzes verwendet werden kann, in verschiedenen Ansichten (Fig. 11A und Fig. 11B),
- Fig. 12: verschiedene Ansichten (Fig. 12A und Fig. 12B) zur Illustration der Montage des Schneideinsatzes, und
- Fig. 13: verschiedene Ansichten (Fig. 13A und Fig. 13B) zur Illustration des Demontagevorgangs des Schneideinsatzes.

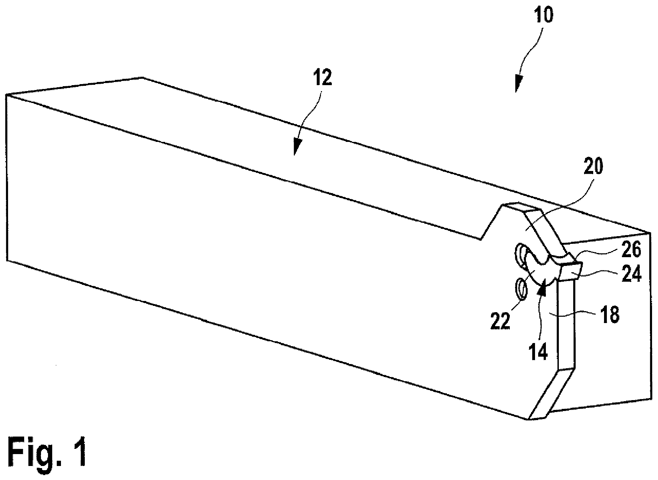

Fig. 1 zeigt eine perspektivische Ansicht eines erfindungsgemäßen Werkzeugs, welches in seiner Gesamtheit mit der Bezugsziffer 10 bezeichnet ist. Das erfindungsgemäße Werkzeug 10 wird vorwiegend zum Einstechdrehen oder Längsdrehen verwendet. Es weist einen Halter 12 und einen darin angeordneten Schneideinsatz 14 auf. Der Schneideinsatz 14 ist in einer am vorderen Ende des Halter 12 vorgesehen Aufnahme 16 angeordnet. Diese schlitzförmige Aufnahme 16 wird durch zwei im Wesentlichen starre Klemmbacken gebildet, eine unter Klemmbacke 18 und eine obere Klemmbacke 20. Zwischen diesen beiden Klemmbacken 18, 20 ist der Schneideinsatz 14 geklemmt gehalten.

Der Schneideinsatz 14 weist einen Schaft 22 und einen am werkstückseitigen Ende des Schaftes 22 angeordneten Schneidkopf 24 auf. Am stirnseitigen Ende des Schneidkopfes 24 ist eine geradlinige Schneidkante 26 angeordnet. In einer Seitenansicht betrachtet ist sowohl die Aufnahme 16 als auch der darin angeordnete Schaft 22 des Schneideinsatzes 14 im Wesentlichen kreisbogenförmig, also gekrümmt ausgestaltet. Zum Einsetzen des Schneideinsatzes 14 in die Aufnahme 16 wird dieser zwischen den beiden Klemmbacken 18, 20 in den Halter 12 eingeschwenkt. In ähnlicher (umgekehrter) Art und Weise lässt sich der Schneideinsatz 14 vom Halter 12 auch wieder lösen.

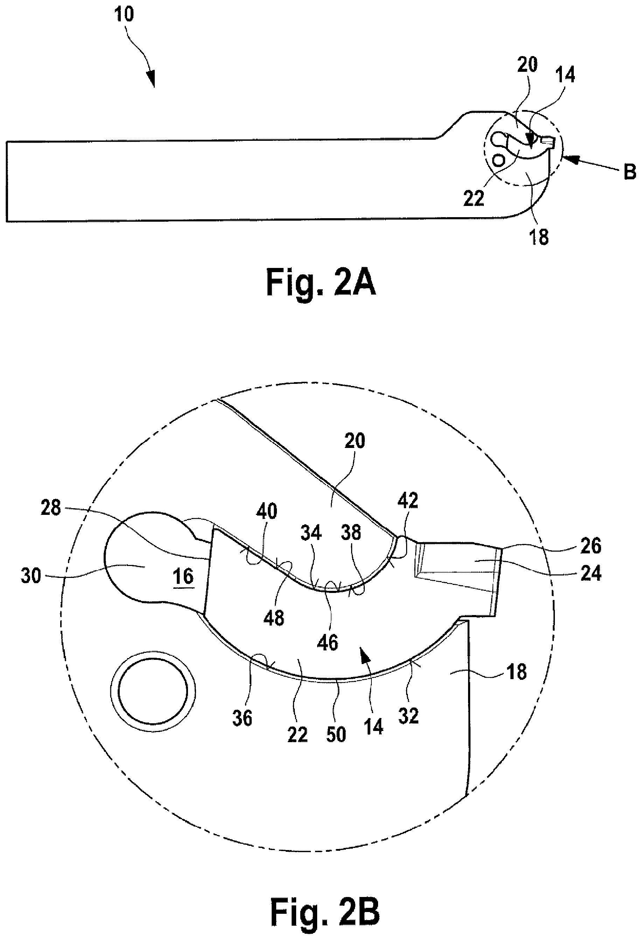

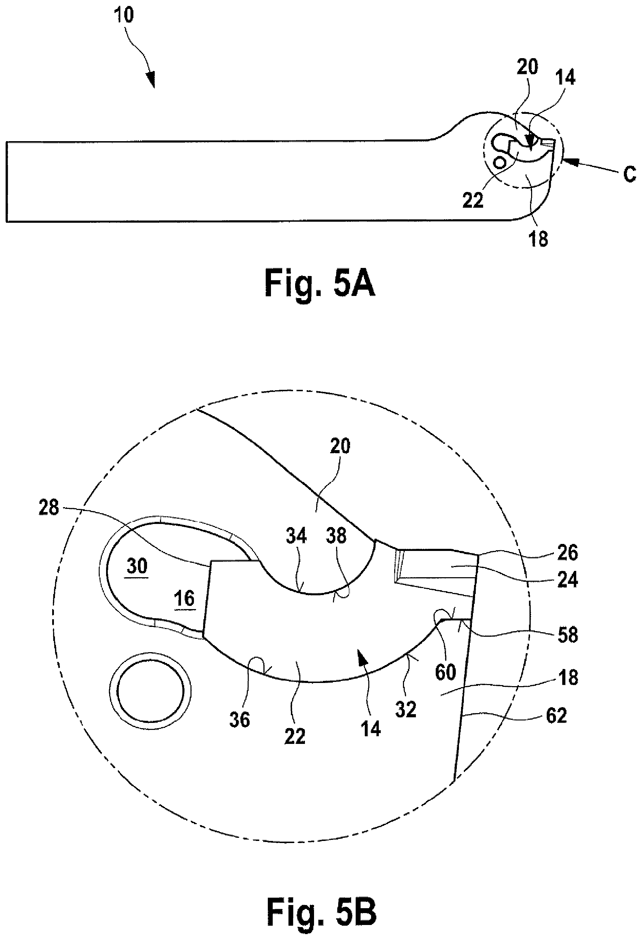

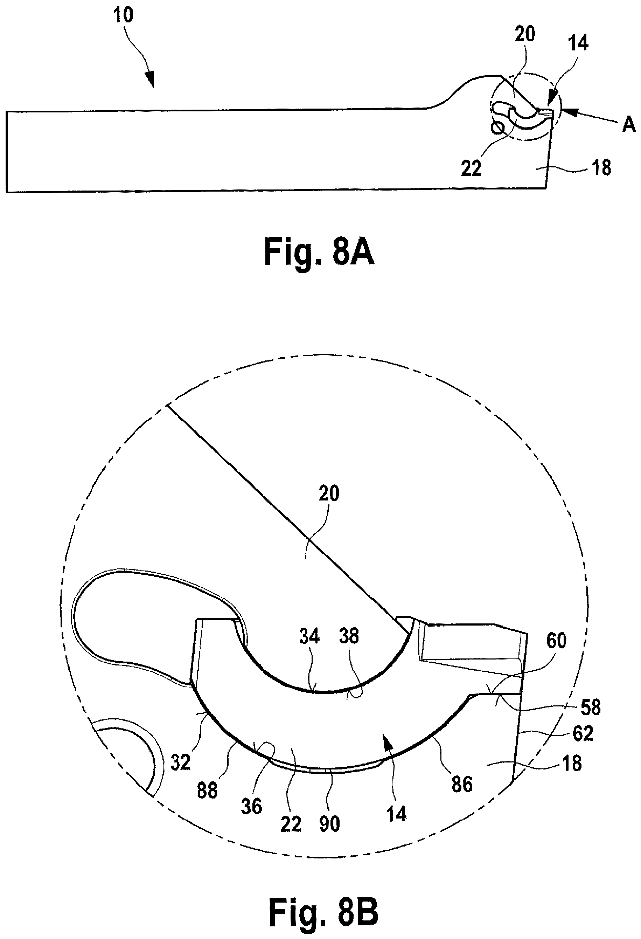

Die Fig. 2 bis 10 zeigen beispielhafte Ausführungsformen des Werkzeugs 10 gemäß der vorliegenden Erfindung, wobei die Fig. 2 bis 4 die erste Ausführungsform, die Fig. 5 bis 7 die zweite Ausführungsform und die Fig. 8 bis 10 die dritte Ausführungsform zeigen. In Fig. 2A ist das Werkzeug 10 samt Halter 12 und dem darin eingesetzten Schneideinsatz 14 gemäß der ersten Ausführungsform in einer Seitenansicht gezeigt. Fig. 2B zeigt die dazugehörige Detailansicht, welche in Fig. 2 mit "B" angedeutet ist.

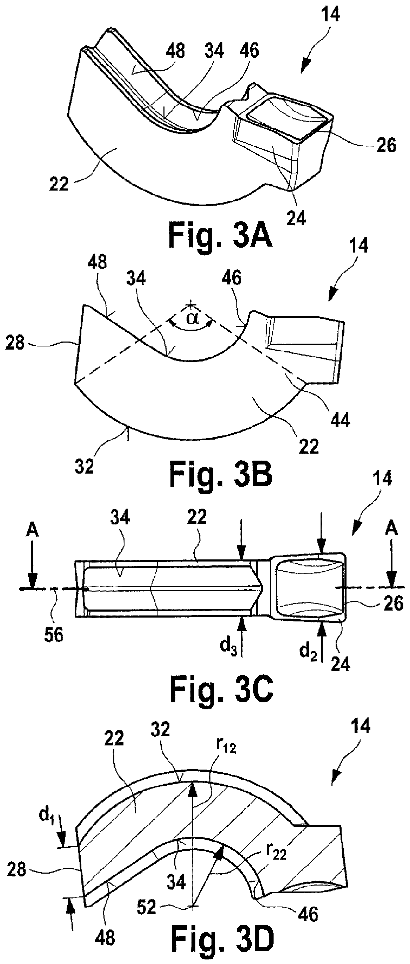

Aus Fig. 2B wird ersichtlich, dass sich die Aufnahme 16 über einen größeren Winkelbereich erstreckt als der kreisbogenförmige Schaft 22 des Schneideinsatzes 14. Wie aus Fig. 3B, welche den Schneideinsatz 14 von der Seite zeigt, ersichtlich ist, erstreckt sich zumindest die Unterseite des Schaftes 22 des Schneideinsatzes 14 entlang eines Kreisbogens, welcher den Öffnungswinkel α aufweist. Dieser schematisch eingezeichnete Öffnungswinkel α besitzt eine Größe von mindestens 90°. Wie aus Fig. 2B ersichtlich ist, ist der zugehörige Winkelbereich der Aufnahme 16 größer ausgestaltet. Der Schaft 22 ist in der Aufnahme 16 daher so gehalten, dass das halterseitige Ende des Schaftes 22, welches mit der Bezugsziffer 28 bezeichnet ist, von dem halterseitigen Ende der Aufnahme 16 (bezeichnet mit Bezugsziffer 30) beabstandet ist. Das dem Schneidkopf 24 des Schneideinsatzes 14 gegenüberliegende stirnseitige Ende 28 (vorliegend als halterseitiges Ende 28 des Schaftes 22 bezeichnet) hat daher keinen Kontakt zum Halter 12. Es liegt also am Halter 12 nicht an.

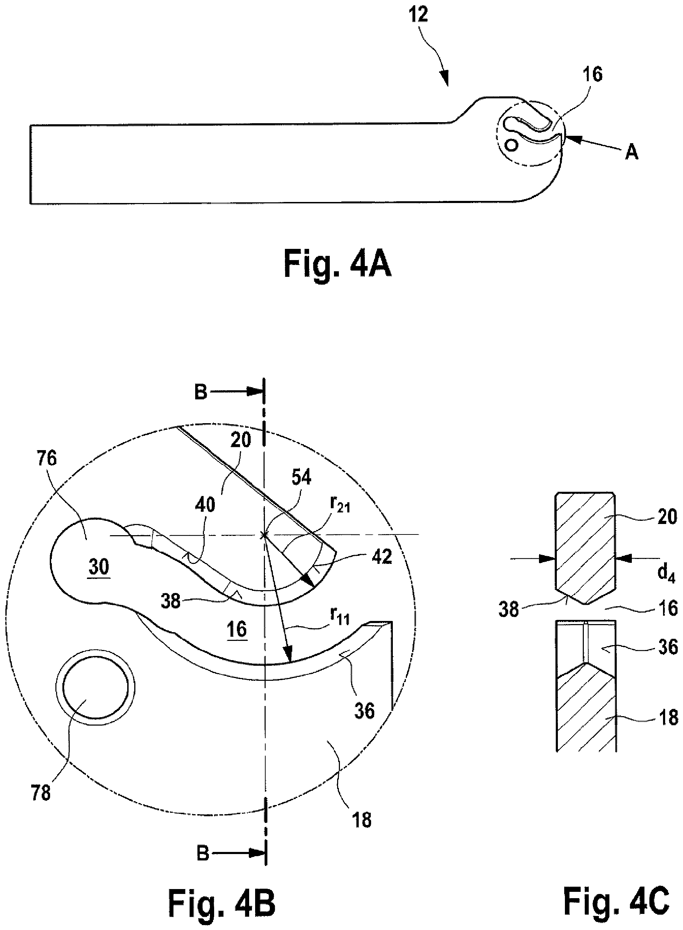

Gemäß der ersten Ausführungsform liegt der Schneideinsatz 14 bzw. der Schaft 22 des Schneideinsatzes 14 ausschließlich mit seinen unteren und oberen Anlageflächen 32, 34 an der durch die Klemmbacken 18, 20 gebildeten Aufnahme 16 an. Diese unteren und oberen Anlageflächen 32, 34 des Schafts 22 sind in den Fig. 3A-3D, in welchen der Schneideinsatz 14 in Alleinstellung in unterschiedlichen Ansichten gezeigt ist, im Detail ersichtlich. Korrespondierend dazu weist der Halter 12 eine an der unteren Klemmbacke 18 am Rand der Aufnahme 16 angeordnete untere Anschlagfläche 36 und eine am gegenüberliegenden Rand der Aufnahme 16 an der oberen Klemmbacke 20 angeordnete obere Anschlagfläche 38 auf. Diese Anschlagflächen 36, 38 sind in Fig. 4B, welche das in Fig. 4A angedeutete Detail A zeigt, vergrößert dargestellt.

Im montierten Zustand liegt der Schaft 22 des Schneideinsatzes 14 also mit seiner unteren Anlagefläche 32 formschlüssig an der unteren Anschlagfläche 36 sowie mit seiner oberen Anlagefläche 34 formschlüssig an der oberen Anschlagfläche 38 an den Klemmbacken 18, 20 des Halters 12 an.

Dieser oben beschriebene Formschluss wird erst bei der in Fig. 2B dargestellten Endstellung des Schneideinsatzes 14 innerhalb des Halters 12 erreicht. Unter "Endstellung" wird vorliegend die montierte Stellung des Schneideinsatzes 14 verstanden, bei welcher das Werkzeug 10 einsatzbereit ist. Um in dieser Stellung einen präzisen und mechanisch stabilen Plattensitz zu erreichen, ist die obere Anschlagfläche 38 der Aufnahme 16 im Bereich des halterseitigen Endes 30 gemäß der ersten Ausführungsform zumindest teilweise geradlinig ausgestaltet. Dieser geradlinige, also ungekrümmte (nicht kreisbogenförmige) Teilabschnitt der oberen Anschlagfläche 38 ist mit der Bezugsziffer 40 bezeichnet.

Gemäß der in den Fig. 2-4 dargestellten ersten Ausführungsform des Werkzeugs 10 weist die obere Anschlagfläche 38 im vorderen Bereich, also einen kreisbogenförmigen Teilabschnitt 42 und im hinteren Bereich einen geradlinigen, ungekrümmten Teilabschnitt 40 auf. Dementsprechend ist auch ein vorderer, im Bereich des werkstückseitigen Endes 44 des Schneideinsatzschaftes 22 angeordneter Teilabschnitt 46 der oberen Anlagefläche 34 kreisbogenförmig ausgestaltet und ein im Bereich des halterseitigen Endes 28 angeordneter Teilabschnitt 48 der oberen Anlagefläche 34 geradlinig ausgestaltet (siehe dazu beispielsweise Fig. 3B, 3D).

Die geradlinig ausgestalteten Teilabschnitte 40, 48 der oberen Anschlagfläche 38 bzw. der oberen Anlagefläche 34 dienen gemäß der ersten Ausführungsform des Werkzeugs 10 als Endanschlag. Dieser Endanschlag definiert die Endstellung bzw. die montierte Stellung des Schneideinsatzes 14. In der montierten Stellung liegt der Schneideinsatz 14 dementsprechend mit dem geradlinigen Teilabschnitt 48 an der oberen Klemmbacke 20 sowie im Bereich des Scheitelpunktes der unteren Anlagefläche 32 (bezeichnet mit Bezugsziffer 50) an der unteren Klemmbacke 18 des Halters 12 an. Hierdurch wird eine exakt definierte und mechanisch stabile Anlage erreicht. Ein extra Anschlag am stirnseitigen Ende 28, wie dies häufig bei Werkzeugen aus dem Stand der Technik vorgesehen ist, wird hier nicht benötigt.

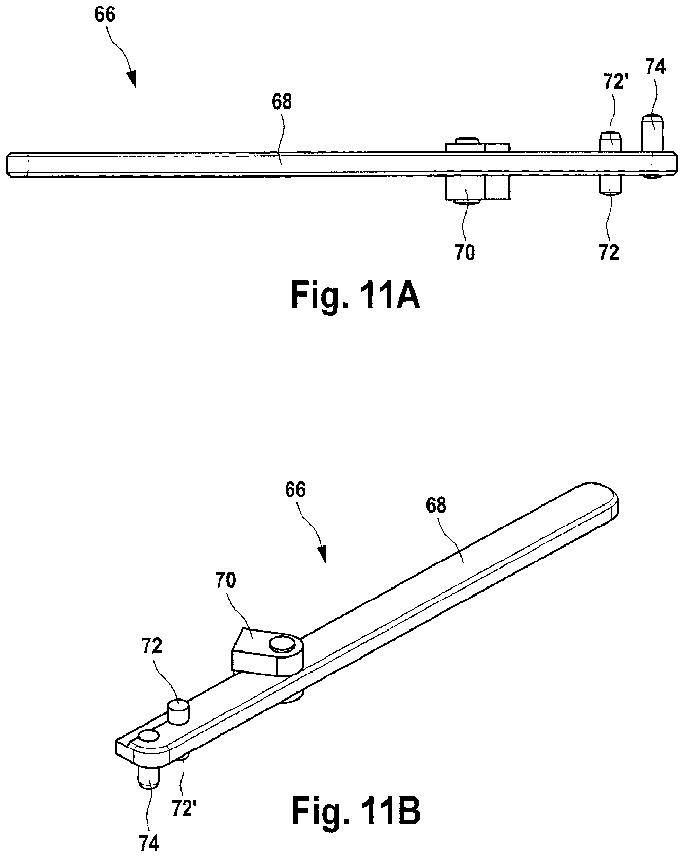

Ein weiterer Unterschied gegenüber den aus dem Stand der Technik bekannten Werkzeugen besteht darin, dass zur Klemmung des Schneideinsatzes 14 innerhalb des Halters 12 keine extra Klemmschraube vorgesehen sein muss. Sowohl die untere als auch die obere Klemmbacke 18, 20 sind vorliegend beide im Wesentlichen starr ausgestaltet. Ein Aufspreizen der Klemmbacken 18, 20 zum Einsetzen des Schneideinsatzes 14 ist hier also nicht vorgesehen. Dieser wird lediglich in die Aufnahme 16 eingeschoben bzw. eingeschwenkt bis oben genannte Endstellung erreicht ist. Dies kann mit Hilfe eines einfachen Montagehebels erreicht werden, welcher weiter unten in Bezug auf die Fig. 11 bis 13 näher erläutert ist.

Durch die im Wesentlichen starre Ausbildung der Klemmbacken 18, 20 kann somit auch der sonst übliche Dehnungsschlitz entfallen, welcher bei einer elastischen Ausgestaltung der oberen Klemmbacke 20 ansonsten zwingend notwendig wäre. Dies hört sich zunächst trivial an. In der Praxis ermöglicht ein Wegfall eines solchen Dehnungsschlitzes jedoch eine wesentlich kompaktere Bauform des Halterkopfes des Werkzeugs 10.

Bezüglich der ersten Ausführungsform sei noch erwähnt, dass die bogenförmig ausgestaltete untere Anschlagfläche 36 einen gleichgroßen Krümmungsradius r₁₁ wie die untere Anlagefläche 32 des Schneideinsatzschaftes 22 aufweist (vergleiche Krümmungsradius r₁₂ in Fig. 3D). Ebenso weist auch der bogenförmig ausgestaltete Teilabschnitt 42 der oberen Anschlagfläche 38 einen gleich großen Krümmungsradius r₂₁ auf wie die obere Anlagefläche 34 des Schneideinsatzschaftes 22 (siehe Krümmungsradius r₂₂ in Fig. 3D). Die gleich großen Krümmungsradien r₁₁ und r₁₂ der unteren Anschlagfläche 36 bzw. der unteren Anlagefläche 32 werden vorliegend als erste Krümmungsradien r₁₁, r₁₂ bezeichnet. Demgegenüber werden die gleich großen Krümmungsradien r₂₁, r₂₂ der oberen Anschlagfläche 38 bzw. der oberen Anlagefläche 34 als zweite Krümmungsradien r₂₁, r₂₂ bezeichnet. Gemäß der in den Fig. 2 bis 4 dargestellten ersten Ausführungsform besitzen die ersten und zweiten Krümmungsradien r₁₁, r₁₂ bzw. r₂₁, r₂₂ jeweils die gleichen (identischen) Krümmungs- bzw. Radienzentren 52, 54 (vergleiche Fig. 3D und 4B).

Dadurch dass die untere Anlagefläche 32 des Schneideinsatzschaftes 22 durchgehend kreisbogenförmig ausgestaltet ist (mit Radius r₁₂) und der hintere Teilabschnitt 48 der oberen Anlagefläche 34 geradlinig ausgestaltet ist, verjüngt sich der Schaft 22 des Schneideinsatzes 14 im Bereich des halterseitigen Endes 28 etwas. Dies ist insbesondere in Fig. 3D durch den eingezeichneten Abstand d₁ verdeutlicht. Der Abstand d₁ ist kleiner als die Differenz der beiden Krümmungsradien r₁₂ und r₂₂. Auf ähnliche Art und Weise verjüngt sich die Aufnahme 16 aufgrund der durchgehend kreisbogenförmig ausgestalteten unteren Anschlagfläche 36 sowie dem geradlinig ausgestalteten Teilabschnitt 40 der oberen Anschlagfläche 38 im Bereich des halterseitigen Endes 30.

Aus den Fig. 3 und 4 sind folgende weitere Merkmale ersichtlich: Wie insbesondere in Fig. 3C zu sehen ist, ist der Schneidkopf 24 in mindestens einer Richtung quer zur Einführungsrichtung 56 des Schaftes 22 breiter ausgestaltet als der Schaft 22 und die Öffnung der Aufnahme 16 in dieser Richtung. Der Schaft 22 selbst ist in dieser Richtung ebenfalls größer ausgestaltet als die Aufnahme 16 in selbiger Richtung. Dadurch ergibt sich folgendes Größenverhältnis: d₂ > d₃ > d₄ (vergleiche Fig. 3C und 4C). Dieses Größenverhältnis hat im Wesentlichen den Zweck, dass sowohl Schneidkopf 24 als auch Schaft 22 seitlich etwas über die Grenzflächen der Klemmbacken 18, 20 überstehen und somit eine unerwünschte Kollision des Halters 12, beispielsweise während des Einstechdrehens, verhindert wird. Durch Vergleich der Fig. 4C und 3A, C wird im Übrigen ersichtlich, dass sowohl die untere Anschlagfläche 36 und die untere Anlagefläche 32 als auch die obere Anschlagfläche 38 und die obere Anlagefläche 34 jeweils miteinander korrespondierende Querschnittsprofile aufweisen. Diese Querschnittsprofile sind vorzugsweise V-förmig ausgestaltet. Jede Anschlag- bzw. Anlagefläche 32, 34, 36, 38 weist somit jeweils zwei spitz zueinander zulaufende Flanken auf, welche insbesondere ein seitliches Herauslösen des Schneideinsatzes 14 aus dem Halter 12 wirksam verhindern.

Die Fig. 5-7 zeigen eine zweite Ausführungsform des erfindungsgemäßen Werkzeugs 10. Gleiche oder ähnliche Bauteile, welche auch gemäß der ersten Ausführungsform (siehe Fig. 2-4) auftreten, sind darin mit den gleichen Bezugszeichen versehen. Im Folgenden werden im Wesentlichen die Unterschiede der zweiten Ausführungsform im Vergleich zu oben beschriebener erster Ausführungsform erläutert.

Auf den ersten Blick gleicht die zweite Ausführungsform der ersten Ausführungsform. Auch hier kommt ein kreisbogenförmig ausgestalteter Schneideinsatz 14 zum Einsatz, welcher sich in der ebenfalls kreisbogenförmig ausgestalteten Aufnahme 16 des Halters 12 auswechselbar anordnen lässt. Gleich wie gemäß der ersten Ausführungsform des erfindungsgemäßen Werkzeugs 10 sind die Klemmbacken 18, 20 im Wesentlichen starr ausgestaltet. Auch hier ist im Bereich des halterseitigen Endes 28 bzw. 30 kein Anschlag zwischen dem Schaft 22 des Schneideinsatzes 14 und dem Halter 12 vorgesehen.

Im Unterschied zur ersten Ausführungsform sind sowohl die unteren Anlage- und Anschlagflächen 32, 36 als auch die oberen Anlage- und Anschlagflächen 34, 38 jeweils durchgängig kreisbogenförmig ausgestaltet. Ein geradlinig verlaufender Teil der oberen Anlage- bzw. Anschlagfläche 34, 38 im hinteren Bereich des Schaftes 22 bzw. der oberen Klemmbacke 20 ist hier nicht vorgesehen.

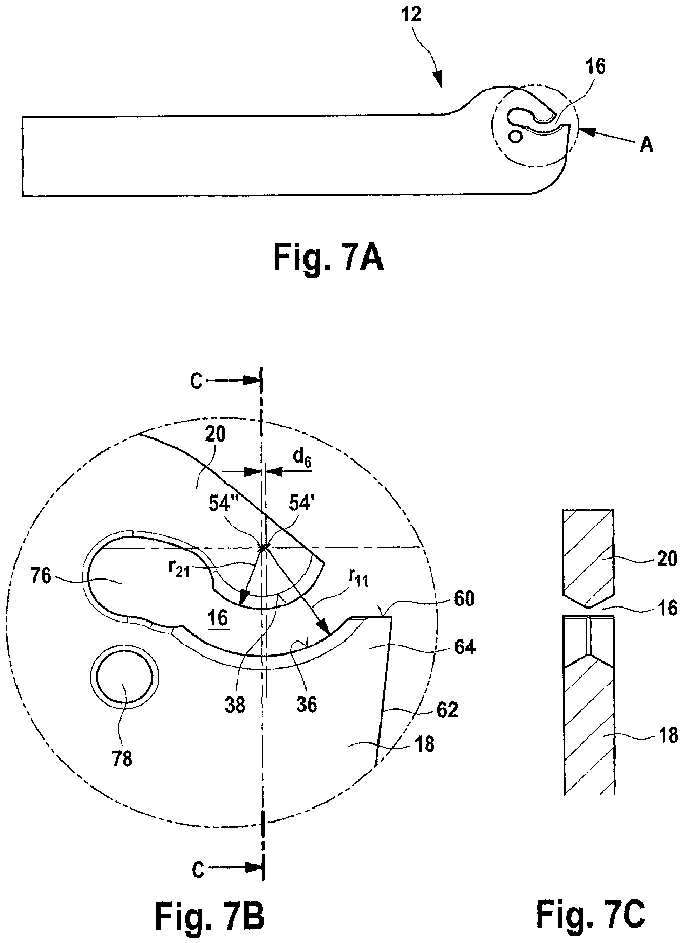

Gemäß der zweiten Ausführungsform dient eine im vorderen Bereich des Schneideinsatzes 14 vorgesehene Gegenanschlagfläche 58 als Anschlag für den Schneidkopf 24 (siehe beispielsweise Fig. 5B). Diese Gegenanschlagfläche 58 ist vorzugsweise parallel zur Schneidkante 26 unterhalb des Schneidkopfes 24 angeordnet. In montiertem Zustand liegt diese Gegenanschlagfläche 58 auf einer Auflagefläche 60 auf. Die genannte Auflagefläche 60 ist am werkstückseitigen Ende 62 der unteren Klemmbacke 18 an die Aufnahme 16 angrenzend angeordnet. Hierzu ist am werkstückseitigen Ende 62 an der unteren Klemmbacke 18 ein Vorsprung 64 angeordnet, welcher die Aufnahme 16 nach vorne hin verlängert (siehe insbesondere Fig. 7B).

Gemäß der zweiten Ausführungsform ist der Anschlag zwischen Schneideinsatz 14 und Halter 12 also im vorderen Bereich vorgesehen, und nicht wie gemäß der ersten Ausführungsform im hinteren Bereich der Aufnahme 16.

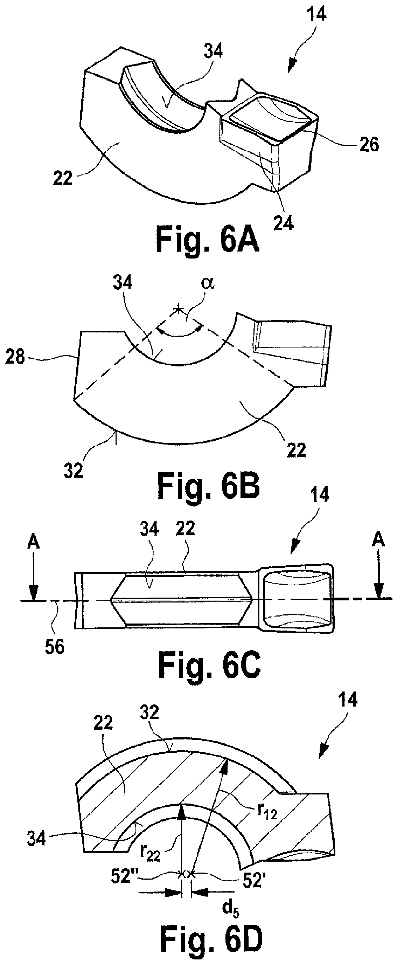

Zudem wird die in montiertem Zustand zwischen den Klemmbacken 18, 20 und dem Schneideinsatz 14 entstehende Klemmkraft durch eine geringfügig versetzte Anordnung der Krümmungsradienzentren der oberen und unteren Anlage- und Anschlagflächen 32, 34, 36, 38 erhöht. Wie dies beispielsweise aus Fig. 6D hervorgeht, weisen der Krümmungsradius r₁₂ der unteren Anlagefläche 32 und der Krümmungsradius r₂₂ der oberen Anlagefläche 34 unterschiedliche Mittelpunkte auf. Dies ist in Fig. 6D durch den Abstand d₅ übertrieben dargestellt (nicht maßstabsgetreu). In Realität ist der Krümmungsmittelpunkt 52' der unteren Anlagefläche 32 nur um wenige Hundertstel zu dem Krümmungsmittelpunkt 52" der oberen Anlagefläche 34 versetzt.

In ähnlicher Weise ist auch der Krümmungsmittelpunkt 54' der unteren Anschlagfläche 36 des Halters 12 um wenige Hundertstel gegenüber dem Krümmungsmittelpunkt 54" der oberen Anschlagfläche 38 versetzt. Dies ist in Fig. 7B durch den Abstand d₆ übertrieben dargestellt (nicht maßstabsgetreu). Vorzugsweise ist die Versetzung der Krümmungszentren 52', 52" genau entgegengesetzt zu der Versetzung der Krümmungszentren 54', 54". Hierdurch lässt sich die Klemmwirkung zusätzlich erhöhen.

Wenngleich dies aus den Figuren nicht explizit hervorgeht, so ist es gemäß der zweiten Ausführungsform ebenso vorgesehen, dass auch der Krümmungsradius r₁₁ der unteren Anschlagfläche 36 und der Krümmungsradius r₁₂ der unteren Anlagefläche 32 unterschiedliche Mittelpunkte 52', 54' aufweisen. Ebenso ist es bevorzugt vorgesehen, dass auch der Krümmungsradius r₂₁ der oberen Anschlagfläche 38 und der Krümmungsradius r₂₂ der oberen Anlagefläche 34 unterschiedliche Mittelpunkte 52", 54" aufweisen. Auch diese Krümmungszentren sind daher vorzugsweise geringfügig versetzt zueinander.

Es sei jedoch darauf hingewiesen, dass nicht alle oben genannten Krümmungszentren 52', 52" bzw. 54', 54" zwingend notwendigerweise zueinander versetzt sein müssen.

Durch die oben beschriebene versetzte Anordnung der Krümmungszentren 52', 52", 54', 54" erhöht sich die Klemmkraft beim Einsetzen des Schneidsatzes 14 zunehmend bis die Endstellung erreicht ist und die Gegenanschlagfläche 58 an die Auflagefläche 60 anstößt. Auch in diesem Fall wird dadurch ein optimal definierter und mechanisch stabiler Plattensitz erreicht. Selbst wenn eine der Klemmbacken 18, 20 aufgrund von Materialermüdung im Laufe der Zeit ein wenig nachgeben sollte, so würde dies lediglich dazu führen, dass der Schneideinsatz 14 geringfügig weiter nach innen in die Aufnahme 16 hineinrutscht. Die hierdurch geringfügig veränderte Spitzenhöhe ist nahezu vernachlässigbar.

Die übrigen Teile der Aufnahme 16 sowie auch das in Fig. 7C dargestellt Querschnittsprofil gleichen der ersten Ausführungsform. Ebenso erstrecken sich die kreisbogenförmige Aufnahme 16 und der kreisbogenförmige Schaft 22, gemessen an der unteren Anschlagfläche 36 der Aufnahme 16 bzw. der unteren Anlagefläche 32 des Schneideinsatzes 14, auch bei der zweiten Ausführungsform jeweils über mindestens 90°. Wie aus Fig. 5B ersichtlich ist, erstreckt sich auch hier die Aufnahme 16 über einen größeren Winkelbereich als der Schaft 22 des Schneideinsatzes, so dass der Schaft 22 in der Aufnahme 16 so gehalten wird, dass das halterseitige Ende 28 des Schaftes 22 von dem halterseitigen Ende 30 der Aufnahme 16 beabstandet ist. Im Übrigen sei darauf hingewiesen, dass trotz der versetzten Krümmungszentren 52', 52", 54', 54" die Krümmungsradien r₁₁ und r₁₂ bzw. r₂₁ und r₂₂ jeweils gleich groß sind.

In den Fig. 8-10 ist eine dritte Ausführungsform des erfindungsgemäßen Werkzeugs 10 dargestellt. Auch hier sind gleiche oder ähnliche Bauteile, welche auch gemäß der ersten beiden Ausführungsformen auftreten, mit den gleichen Bezugszeichen versehen.

Ähnlich wie bei der in den Fig. 5-7 gezeigten zweiten Ausführungsform ist auch gemäß der dritten Ausführungsform der Anschlag zwischen dem Schneideinsatz 14 und dem Halter 12 im vorderen Bereich vorgesehen. Hierzu weist der Schneideinsatz 14 in dessen vorderen Bereich eine Gegenanschlagfläche 58 auf, mit der der Schneideinsatz 14 in montiertem Zustand auf einer Auflagefläche 60 anliegt, welche am werkstückseitigen Ende 62 der unteren Klemmbacke 18 an die Aufnahme 16 angrenzend angeordnet ist. Die unteren und oberen Anlageflächen 32, 34 des Schneideinsatzschaftes 22 sind gemäß der in den Fig. 8-10 gezeigten dritten Ausführungsform ebenfalls durchgängig gekrümmt bzw. kreisbogenförmig ausgestaltet. Im Unterschied zu der in den Fig. 5-7 gezeigten zweiten Ausführungsform hat die untere Anlagefläche 32 des Schaftes 22 jedoch keine einheitliche Krümmung entlang ihres Umfangs.

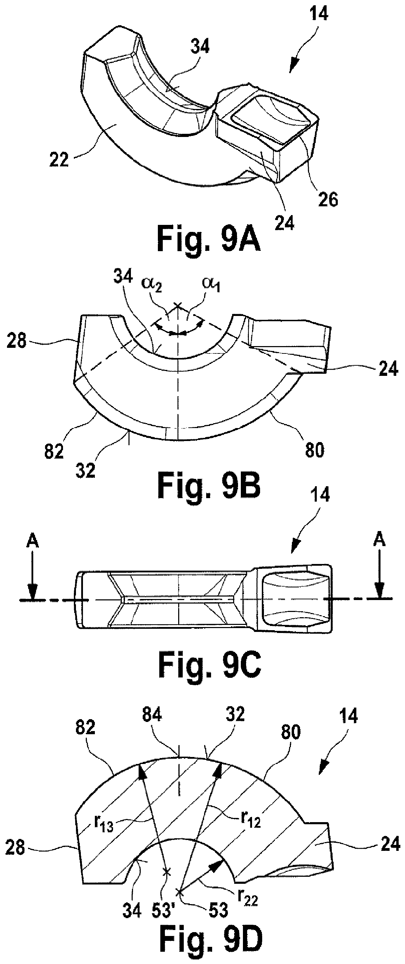

Wie insbesondere aus den Fig. 9B und D hervorgeht, weist die untere Anlagefläche 34 des Schneideinsatzschaftes 22 zwei verschiedene, ebenfalls kreisbogenförmig verlaufende Abschnitte 80, 82 auf, welche vorliegend auch als Anlageabschnitte 80, 82 bezeichnet werden. Diese beiden Abschnitte 80, 82 sind unterschiedlich gekrümmt. Sie haben also unterschiedliche Krümmungsradien. Der erste Anlageabschnitt80 verläuft ausgehend von dem Schneidkopf 24 des Schneideinsatzes 14 und überspannt den vorderen Bereich der Unterseite des Schneideinsatzschafts 22. Der zweite Anlageabschnitt 82 überspannt dagegen den hinteren Bereich der Unterseite des Schneideinsatzschafts 22 bis hin zum halterseitigen Ende 28. Mit anderen Worten erstreckt sich der erste kreisbogenförmige Anlageabschnitt 80 über einen ersten Winkelbereich α₁ und der zweiten kreisbogenförmige Anlageabschnitt 82 erstreckt sich über einen zweiten Winkelbereich α₂ (siehe Fig. 9B). Die beiden Winkelbereiche α₁ und α₂ überlappen einander nicht. Vorzugsweise grenzen die beiden kreisbogenförmigen Abschnitte 80, 82 unmittelbar aneinander an. Die beiden Abschnitte 80, 82 gehen vorzugsweise im Bereich des Scheitelpunkts 84 der unteren Anlagefläche 32 ineinander über.

Ein wesentliches Merkmal dieser dritten Ausführungsform besteht darin, dass der erste Anlageabschnitt einen ersten Krümmungsradius r₁₂ aufweist, welcher sich von dem Krümmungsradius r₁₃ des zweiten Anlageabschnitts 82 unterscheidet. Ferner haben die beiden Abschnitte 80, 82 vorzugsweise unterschiedliche Krümmungsmittelpunkte 53 bzw. 53' (siehe Fig. 9B). Der Krümmungsmittelpunkt 53 des ersten Abschnitts der unteren Anlagefläche 32 fällt vorzugsweise mit dem Krümmungsmittelpunkt der oberen Anlagefläche 34 zusammen. Demgegenüber ist der Krümmungsmittelpunkt 53' des zweiten Abschnitts der unteren Anlagefläche 32 vorzugsweise sowohl in Längsrichtung (X-Richtung) als auch in Querrichtung (Y-Richtung) versetzt. Ebenso ist es bevorzugt, dass der Krümmungsradius r₁₃ des zweiten Anlageabschnitts 82 kleiner ist als der Krümmungsradius r₁₂ des ersten Anlageabschnitts 80. Der hintere Bereich des Schafts 22 nahe des halterseitigen Endes 28 verjüngt sich dadurch also keilförmig.

Aufgrund der größeren Krümmung (kleinerer Krümmungsradius r₁₃) im hinteren Bereich des Schafts 22 entsteht beim Einschieben bzw. Einsetzen des Schneideinsatzes 14 in die Aufnahme 16 also eine Keilwirkung, welche bis zum Erreichen der Endposition, in der der Gegenanschlag 58 an der Auflagefläche 60 anliegt, zunimmt. Diese erhöhte Keilwirkung ermöglicht einen verbesserten und stabileren Plattensitz des Schneideinsatzes 14.

Die unteren und oberen Anschlagflächen 36, 38 der Aufnahme 16 sind korrespondierend dazu ausgestaltet. Gemäß der dritten Ausführungsform weist auch die untere Anschlagfläche 36 der Aufnahme 16 zwei Abschnitte 86, 88 auf, welche sich über unterschiedliche, voneinander getrennte (also nicht überlappende) Winkelbereiche erstrecken. Zur sprachlichen Unterscheidung von den oben erwähnten Anlageabschnitten, werden diese beiden Abschnitte 86, 88 vorliegend auch als Anschlagabschnitte 86, 88 bezeichnet.

Auch hier weist der im vorderen Bereich der Aufnahme 16 angeordnete erste Anschlagabschnitt 86 eine geringere Krümmung auf als der im hinteren Bereich der Aufnahme 16 vorgesehene zweite Anschlagabschnitt 88. Der Krümmungsradius r₃₁ des zweiten Anschlagabschnitts 88 ist also kleiner als der Krümmungsradius r₁₁ des ersten Anschlagabschnitts 86. Ähnlich wie dies an der unteren Anlagefläche 32 des Schneideinsatzschafts 22 realisiert ist, weisen auch die an der unteren Anschlagfläche 36 der Aufnahme 16 vorgesehenen Anschlagabschnitte 86, 88 verschiedene Krümmungsmittelpunkte auf. Der erste Abschnitt 86 weist vorzugsweise den gleichen Krümmungsmittelpunkt 55 auf wie die obere Anschlagfläche 38. Der Krümmungsmittelpunkt 55' des zweiten Abschnitts 88 ist versetzt dazu angeordnet.

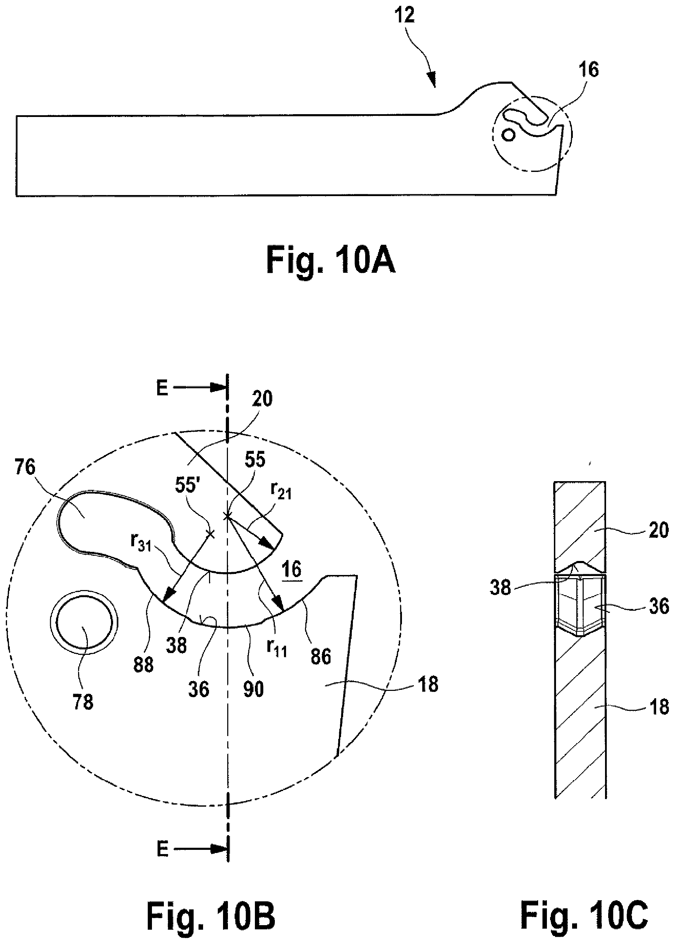

Im Unterschied zu der unteren Anlagefläche 32 des Schneideinsatzschafts 22 sind die beiden an der unteren Anschlagfläche 36 vorgesehenen kreisbogenförmigen Abschnitte 86, 88 jedoch voneinander getrennt. Sie gehen also nicht direkt ineinander tangential über. Wie insbesondere aus den Fig. 8B und 10B hervorgeht, sind die beiden Anschlagabschnitte 86, 88 durch eine Aussparung 90 voneinander getrennt. Diese Aussparung 90 verläuft quer, also vorzugsweise orthogonal zur Halterlängsachse durch die untere Anschlagfläche 36 der Aufnahme 16 hindurch. Die Aussparung 90 ist vorzugsweise als Vertiefung ausgebildet. Der Grund der Aussparung 90 ist also gegenüber den Oberflächen der beiden Anschlagabschnitten 86, 88 teilweise zurückgesetzt.

Der Sinn und Zweck dieser Aussparung 90 lässt sich am besten der in Fig. 8B dargestellten Detailansicht entnehmen. Zum einen lässt sich der Schneideinsatz 14 aufgrund dieser Aussparung 90 leichter in die Aufnahme 16 einsetzen. Vor allen Dingen jedoch verhindert die Aussparung 90, dass der Schneideinsatzschaft 22 auch im Bereich seines unteren Scheitelpunkts 84 an der Aufnahme 16 des Werkzeughalters 12 aufliegt. Der Schneideinsatzschaft 22 liegt in dem vollständig eingesetzten Zustand des Schneideinsatzes 14 also "nur" an der oberen Anschlagfläche 38 sowie entlang der beiden Abschnitte 86, 88 der unteren Anschlagfläche 36 an den Klemmbacken 18, 20 an. Hierdurch entsteht eine Art Drei-Punkt-Anlage, welche einen optimalen Plattensitz garantiert. Ein unabsichtliches Herauslösen des Schneideinsatzes 14 aus der Aufnahme 16 des Werkzeughalters 12 wird dadurch effektiv verhindert. Ebenso ist dadurch die Krafteinleitung der an der Schneide 26 während der Bearbeitung auftretenden Kräfte in den Werkzeughalter 12 optimiert. Es versteht sich, dass der Schneideinsatz 14, wie oben bereits erwähnt, mit der Unterseite des Schneidkopfs 24 zusätzlich noch auf der Gegenanschlagfläche 60 im vorderen Bereich der unteren Klemmbacke 18 aufliegt.

Ein weiterer Unterschied zu den ersten beiden Ausführungsformen besteht darin, dass die Querschnitte der unteren und oberen Anlage- bzw. Anschlagflächen 32, 34 bzw. 36, 38 anders ausgestaltet sind. Diese sind nämlich sozusagen umgekehrt ausgestaltet. Die untere und obere Anlagefläche 32, 34 des Schneideinsatzschaftes 22 ist gemäß der dritten Ausführungsform nämlich mit einem konkaven Querschnitt ausgestaltet, wohingegen die untere und obere Anschlagfläche 36, 38 mit jeweils konvexen Querschnitten ausgestaltet sind. Ähnlich wie gemäß den ersten beiden Ausführungsformen sind die Querschnitte dabei jeweils im Wesentlichen V-förmig ausgestaltet. Es versteht sich jedoch, dass auch andere prismatische Querschnitte für die Anlage- bzw. Anschlagflächen 32, 34 bzw. 36, 38 gewählt werden können.

In Fig. 11A und 11B ist eine Seitenansicht und eine perspektivisch Ansicht eines Montagehebels 66 dargestellt. Dieser Montagehebel 66 lässt sich sowohl zur Montage als auch zur Demontage des Schneideinsatzes 14 am bzw. aus dem Halter 12 verwenden. Der Montagehebel 66 weist ein langgestrecktes Hebelelement 68 auf, an welchem mehrere Stifte 72, 72', 74 angeordnet sind. Diese Stifte 72, 72', 74 lassen sich in die in der Aufnahme 16 vorgesehene Bohrung 76 und in die im Halter 12 vorgesehene Bohrung 78 (siehe beispielsweise Fig. 4B und 7B) einsetzen. Des Weiteren weist der Montagehebel 66 einen beweglich gelagerten Amboss 70 auf, welcher bei der Montage des Schneideinsatzes 14 an diesem angesetzt wird. Der Amboss 70 ist vorzugsweise aus Messing, um Beschädigungen der Schneidkante 26 bei der Montage zu vermeiden.

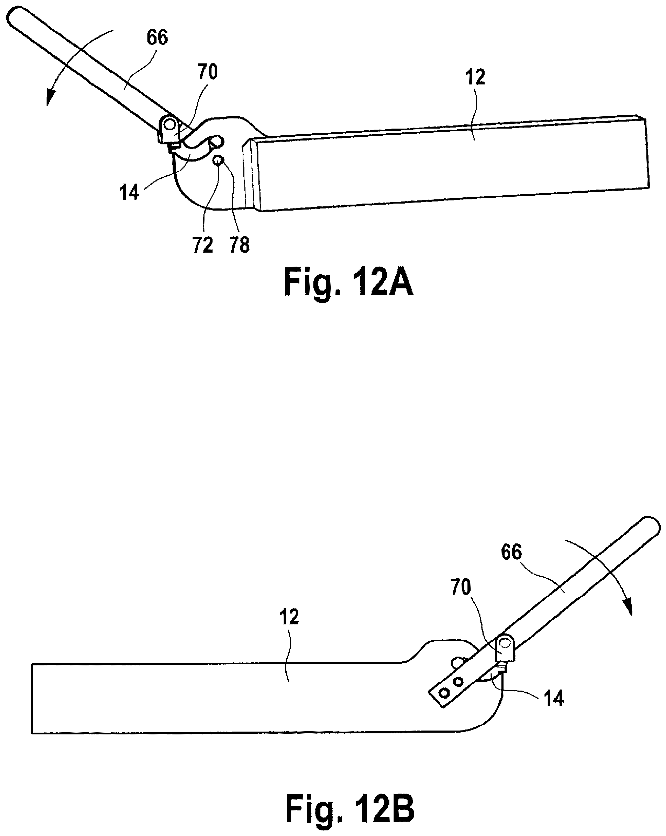

Die Fig. 12A und 12B verdeutlichen den Montagevorgang, bei dem der Schneideinsatz 14 in der Aufnahme 16 des Halters 12 festgespannt wird. Hierzu wird der Stift 72 in die Bohrung 78 eingesetzt und der Amboss 70 an der Oberseite des Schneidkopfes 24 des Schneideinsatzes 14 angesetzt. Durch die in den Fig. 12A, B dargestellte Schwenkbewegung des Hebelelements 68 lässt sich der Schneideinsatz 14 somit auf einfache Art und Weise, mit nur geringem Kraftaufwand bis zum Erreichen der Endstellung im Halter 12 festklemmen. Das Drehzentrum der Hebelbewegung ist dabei der in die Bohrung 78 eingesetzte Stift 72.

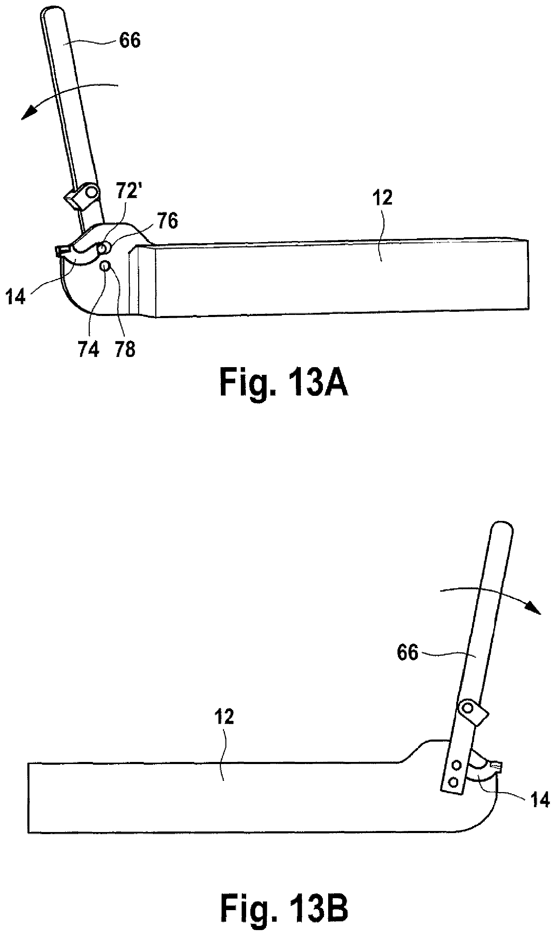

Auf ähnliche Weise lässt sich der Schneideinsatz 14 mit Hilfe des Montagehebels 66 wiederum vom Halter lösen. In diesem Fall wird, wie in den Fig. 13A, B dargestellt ist, der Stift 74 in die Bohrung 78 und der Stift 72' in die Bohrung 76 eingesetzt. Dann wird der Montagehebel 66 um den in die Bohrung 78 eingesetzten Stift 74 geschwenkt. Durch diese Schwenkbewegung wird der Schneideinsatz 14 mit Hilfe des Stifts 72' aus der Schneideinsatz-Aufnahme 16 heraus geschoben. Somit lässt sich ein und derselbe Montagehebel 66 sowohl zur Montage als auch zur Demontage des Schneideinsatzes 14 verwenden.

Den Erfindern ist es also gelungen, ein neuartiges Drehwerkzeug mit einer bogenförmig ausgestalteten Schneidplatte bereitzustellen, welches sich insbesondere durch einen mechanisch stabilen Plattensitz und eine gesamthaft betrachtet kompakte Bauweise auszeichnet. Auch das Werkzeug, welches zum Auswechseln der Schneidplatte verwendet wird, ist relativ einfach ausgestaltet und gut in der Handhabung. Aufgrund des Selbstklemmprinzips kann auf weitere Befestigungsmittel für die Schneidplatte verzichtet werden. Aufgrund der starr ausgestalteten Klemmbacken ist der erfindungsgemäße Halter insgesamt sehr stabil.

## Patentansprüche

1. Spanabhebendes Werkzeug mit
- einem Halter (12) mit einer schlitzförmigen, kreisbogenförmigen Aufnahme (16) mit jeweils einer, an starren Klemmbacken (18, 20) des Halters (12) angebrachten unteren und oberen Anschlagfläche (36, 38) zur Aufnahme (16) eines Schneideinsatzes (14) und
- einem Schneideinsatz (14) mit einem kreisbogenförmigen Schaft (22) mit unterer und oberer Anlagefläche (32, 34), der in der Aufnahme auswechselbar (16) angeordnet ist, und einem an einem werkstückseitigen Ende (44) des Schaftes (22) angeordneten Schneidkopf (24) mit einer Schneidkante (26),
wobei sich die kreisbogenförmige Aufnahme (16) und der kreisbogenförmige Schaft (22), gemessen an der unteren Anschlagfläche (36) der Aufnahme (16) bzw. der unteren Anlagefläche (32) des Schneideinsatzes (14), jeweils über mindestens 90° erstrecken,
wobei sich die Aufnahme (16) über einen größeren Winkelbereich erstreckt als der Schaft (22) des Schneideinsatzes (14), und
wobei der Schaft (22) in der Aufnahme (16) so gehalten wird, dass das halterseitige Ende (28) des Schaftes (22) von dem halterseitigen Ende (30) der Aufnahme (16) beabstandet ist.

2. Spanabhebendes Werkzeug nach Anspruch 1, wobei die untere Anschlagfläche (36) und die untere Anlagefläche (32) einen gleich großen ersten Krümmungsradius (r₁₁, r₁₂) aufweisen und/oder wobei die obere Anschlagfläche (38) und die obere Anlagefläche (34) einen gleich großen zweiten Krümmungsradius (r₂₁, r₂₂) aufweisen.

3. Spanabhebendes Werkzeug nach Anspruch 1 oder 2, wobei wenigstens eine Anschlagfläche (38) der Aufnahme (16) im Bereich des halterseitigen Endes (30) der Aufnahme (16) gerade ausgestaltet ist.

4. Spanabhebendes Werkzeug nach einem der vorstehenden Ansprüche, wobei wenigstens eine Anlagefläche (34) des Schaftes (22) im Bereich des halterseitigen Endes (28) des Schaftes (22) gerade ausgestaltet ist.

5. Spanabhebendes Werkzeug nach einem der vorstehenden Ansprüche, wobei sich die Aufnahme (16) im Bereich des halterseitigen Endes (30) der Aufnahme (16) verjüngt.

6. Spanabhebendes Werkzeug nach einem der vorstehenden Ansprüche, wobei sich der Schaft (22) im Bereich des halterseitigen Endes (28) des Schaftes (22) verjüngt.

7. Spanabhebendes Werkzeug nach einem der vorstehenden Ansprüche, wobei die Klemmbacken (18, 20) des Halters (12) eine an der unteren Anlagefläche (32) des Schneideinsatzes (14) anliegende untere Klemmbacke (18) und eine an der oberen Anlagefläche (34) des Schneideinsatzes (14) anliegende obere Klemmbacke (20) aufweisen, wobei am werkstückseitigen Ende (62) der unteren Klemmbacke (18) an die Aufnahme (16) angrenzend ein Vorsprung (64) vorgesehen ist, welcher eine ebene Auflagefläche (60) als Anschlag für den Schneidkopf (24) aufweist.

8. Spanabhebendes Werkzeug nach Anspruch 2, wobei der erste Krümmungsradius (r₁₁) der unteren Anschlagfläche (36) und der erste Krümmungsradius (r₁₂) der unteren Anlagefläche (32) unterschiedliche Mittelpunkte (52', 54') aufweisen und/oder wobei der zweite Krümmungsradius (r₂₁) der oberen Anschlagfläche (38) und der zweite Krümmungsradius (r₂₂) der oberen Anlagefläche (34) unterschiedliche Mittelpunkte (52", 54") aufweisen.

9. Spanabhebendes Werkzeug nach Anspruch 2 oder 8, wobei der erste Krümmungsradius (r₁₁) der unteren Anschlagfläche (36) und der zweite Krümmungsradius (r₂₁) der oberen Anschlagfläche (38) unterschiedliche Mittelpunkte (54', 54") aufweisen und/oder wobei der erste Krümmungsradius (r₁₂) der unteren Anlagefläche (32) und der zweite Krümmungsradius (r₂₂) der oberen Anlagefläche (34) unterschiedliche Mittelpunkte (52', 52") aufweisen.

10. Spanabhebendes Werkzeug nach einem der vorstehenden Ansprüche, wobei der Schneidkopf (24) in mindestens einer Richtung quer zur Einführungsrichtung (56) des Schaftes (22) breiter ausgestaltet ist als die Größe der Öffnung der Aufnahme (16) in dieser Richtung.

11. Spanabhebendes Werkzeug nach einem der vorstehenden Ansprüche, wobei die untere Anschlagfläche (36) und die untere Anlagefläche (32) ein korrespondierendes Querschnittsprofil aufweisen und/oder wobei die obere Anschlagfläche (38) und die obere Anlagefläche (34) ein korrespondierendes Querschnittsprofil aufweisen.

12. Spanabhebendes Werkzeug nach einem der vorstehenden Ansprüche, wobei der Schaft (22) seitlich an wenigstens einer Seite über die Aufnahme (16) übersteht und dort zumindest bereichsweise einen breiteren Querschnitt aufweist als die Aufnahme (16).

13. Spanabhebendes Werkzeug nach einem der vorstehenden Ansprüche, wobei am halterseitigen Ende (30) der Aufnahme (16) eine erste Bohrung (76) zur Einführung eines ersten Stiftes (72') eines Montagehebels (66) und im Halter (12) eine zweite Bohrung (78) zur Einführung eines zweiten Stiftes (72, 74) des Montagehebels (66) vorgesehen ist.

14. Spanabhebendes Werkzeug nach Anspruch 1, wobei die untere Anlagefläche (32) des kreisbogenförmigen Schafts (22) einen ersten Anlageabschnitt (80) aufweist, der sich über einen ersten Winkelbereich (α₁) des kreisbogenförmigen Schafts (22) erstreckt und einen ersten Krümmungsradius (r₁₂) aufweist, und einen zweiten Anlageabschnitt (82) aufweist, der sich über einen zweiten Winkelbereich (α₂) des kreisbogenförmigen Schafts (22) erstreckt und einen zweiten Krümmungsradius (r₁₃) aufweist, wobei der zweite Krümmungsradius (r₁₃) ungleich dem ersten Krümmungsradius (r₁₂) ist, und wobei der erste Krümmungsradius (r₁₂) des ersten Anlageabschnitts (80) und der zweite Krümmungsradius (r₁₃) des zweiten Anlageabschnitts (82) unterschiedliche Mittelpunkte (53, 53') haben.

15. Spanabhebendes Werkzeug nach Anspruch 14, wobei der erste Anlageabschnitt (80) in den zweiten Anlageabschnitt (82) tangential übergeht.

16. Spanabhebendes Werkzeug nach Anspruch 14, wobei der zweite Anlageabschnitt (82) einen geringeren Abstand vom halterseitigen Ende (28) des Schaftes (22) hat als der erste Anlageabschnitt (80).

17. Spanabhebendes Werkzeug nach Anspruch 16, wobei der erste Krümmungsradius (r₁₂) größer ist als der zweite Krümmungsradius (r₁₃).

18. Spanabhebendes Werkzeug nach Anspruch 14, wobei die untere Anschlagfläche (36) der Aufnahme (16) einen ersten Anschlagabschnitt (86) aufweist, der sich über einen ersten Winkelbereich der kreisbogenförmigen Aufnahme (16) erstreckt, und einen zweiten Anschlagabschnitt (88) aufweist, der sich über einen zweiten Winkelbereich der kreisbogenförmigen Aufnahme (16) erstreckt, wobei die beiden Anschlagabschnitte (86, 88) voneinander unterschiedliche Krümmungsradien (r₁₁, r₃₁) und unterschiedliche Krümmungsmittelpunkte (55, 55') besitzen, und wobei der erste Anschlagabschnitt (86) durch eine in der unteren Anschlagfläche (36) vorgesehene Aussparung (90) von dem zweiten Anschlagabschnitt (88) getrennt ist.

19. Schneideinsatz für ein spanabhebendes Werkzeug (10) nach einem der vorstehenden Ansprüche mit einem Halter (12) und dem Schneideinsatz (14), wobei der Halter (12) eine schlitzförmige, kreisbogenförmige Aufnahme (16) mit jeweils einer, an starren Klemmbacken (18, 20) des Halters (12) angebrachten unteren und oberen Anschlagfläche (36, 38) zur Aufnahme des Schneideinsatzes (14) aufweist, wobei
- der Schneideinsatz (14) einen kreisbogenförmigen Schaft (22) mit einer unteren und einer oberen Anlagefläche (32, 34) aufweist, zur auswechselbaren Anordnung in der Aufnahme (16) ausgestaltet ist, und einen an einem werkstückseitigen Ende (44) des Schaftes (22) angeordneten Schneidkopf (24) mit einer Schneidkante (26) aufweist,
- sich der kreisbogenförmige Schaft (22), gemessen an der der unteren Anlagefläche (32) des Schneideinsatzes (14), über mindestens 90° erstreckt,
- der Schaft (22) des Schneideinsatzes (14) über einen kleineren Winkelbereich erstreckt als die Aufnahme (16) des Halters (12), und
wobei der Schaft (22) dazu ausgestaltet ist, dass er in der Aufnahme (16) so gehalten wird, dass das halterseitige Ende (28) des Schaftes (22) von dem halterseitigen Ende (30) der Aufnahme (16) beabstandet ist.

20. Halter für ein spanabhebendes Werkzeug (10) nach einem der Ansprüche 1 bis 18,
- wobei der Halter (12) eine schlitzförmige, kreisbogenförmige Aufnahme (16) aufweist mit jeweils einer, an starren Klemmbacken (18, 20) des Halters (12) angebrachten unteren und oberen Anschlagfläche (36, 38) zur Aufnahme eines Schneideinsatzes (14), welcher einen kreisbogenförmigen Schaft (22) mit einer unteren und einer oberen Anlagefläche (32, 34) aufweist und mit einem an einem werkstückseitigen Ende (44) des Schaftes (22) angeordneten Schneidkopf (24) mit einer Schneidkante (26) ausgestattet ist,
- wobei sich die kreisbogenförmige Aufnahme (16), gemessen an der unteren Anschlagfläche (32) der Aufnahme (16), über mindestens 90° erstreckt,
- wobei sich die Aufnahme (16) über einen größeren Winkelbereich erstreckt als der Schaft (22) des Schneideinsatzes (14), und
wobei der Halter (12) dazu ausgestaltet ist, dass der Schaft (22) in der Aufnahme (16) so gehalten wird, dass das halterseitige Ende (28) des Schaftes (22) von dem halterseitigen Ende (30) der Aufnahme (16) beabstandet ist.

## Claims

1. Cutting tool comprising:
- a holder (12) having a slot-shaped, arcuate receptacle (16) for receiving a cutting insert (14), said receptacle (16) having a lower and an upper bearing surface (36, 38), each of the lower and the upper bearing surface (36, 38) being arranged at a respective rigid clamping jaw (18, 20) of the holder (12), and
- a cutting insert (14) having an arcuate shank (22) with a lower and an upper locating face (32, 34), and having a cutting head (24) with a cutting edge (26), which cutting head (24) is disposed on a workpiece-side end (44) of the shank (22), wherein the cutting insert is arranged exchangeably in the receptacle (16),
wherein the arcuate receptacle (16) and the arcuate shank (22), measured respectively on the lower bearing surface (36) of the receptacle (16) and the lower locating face (32) of the cutting insert (14), both extend over at least 90°,
wherein the receptacle (16) extends over a larger angular range than the shank (22) of the cutting insert (14), and
wherein the shank (22) is held in the receptacle (16) such that the holder-side end (28) of the shank (22) is distanced from the holder-side end (30) of the receptacle (16).

2. The cutting tool as claimed in claim 1, wherein the lower bearing surface (36) and the lower locating face (32) have an equal-sized first radius of curvature (r₁₁, r₁₂), and/or wherein the upper bearing surface (38) and the upper locating face (34) have an equal-sized second radius of curvature (r₂₁, r₂₂).

3. The cutting tool as claimed in claim 1 or 2, wherein at least one bearing surface (38) of the receptacle (16) is configured straight in the region of the holder-side end (30) of the receptacle (16).

4. The cutting tool as claimed in one of the preceding claims, wherein at least one locating face (34) of the shank (22) is configured straight in the region of the holder-side end (28) of the shank (22).

5. The cutting tool as claimed in one of the preceding claims, wherein the receptacle (16) tapers in the region of the holder-side end (30) of the receptacle (16).

6. The cutting tool as claimed in one of the preceding claims, wherein the shank (22) tapers in the region of the holder-side end (28) of the shank (22).

7. The cutting tool as claimed in one of the preceding claims, wherein the clamping jaws (18, 20) of the holder (12) have a lower clamping jaw (18) bearing against the lower locating face (32) of the cutting insert (14), and an upper clamping jaw (20) bearing against the upper locating face (34) of the cutting insert (14), wherein on the workpiece-side end (62) of the lower clamping jaw (18), adjacent to the receptacle (16), is provided a projection (64), which has a flat support surface (60) as a limit stop for the cutting head (24).

8. The cutting tool as claimed in claim 2, wherein the first radius of curvature (r₁₁) of the lower bearing surface (36) and the first radius of curvature (r₁₂) of the lower locating face (32) have different center points (52', 54'), and/or wherein the second radius of curvature (r₂₁) of the upper bearing surface (38) and the second radius of curvature (r₂₂) of the upper locating face (34) have different center points (52", 54").

9. The cutting tool as claimed in claim 2 or 8, wherein the first radius of curvature (r₁₁) of the lower bearing surface (36) and the second radius of curvature (r₂₁) of the upper bearing surface (38) have different center points (54', 54"), and/or wherein the first radius of curvature (r₁₂) of the lower locating face (32) and the second radius of curvature (r₂₂) of the upper locating face (34) have different center points (52', 52").

10. The cutting tool as claimed in one of the preceding claims, wherein the cutting head (24), in at least a direction transversely to the lead-in direction (56) of the shank (22), is configured wider than the size of the opening of the receptacle (16) in this direction.

11. The cutting tool as claimed in one of the preceding claims, wherein the lower bearing surface (36) and the lower locating face (32) have a corresponding cross-sectional profile, and/or wherein the upper bearing surface (38) and the upper locating face (34) have a corresponding cross-sectional profile.

12. The cutting tool as claimed in one of the preceding claims, wherein the shank (22) protrudes laterally on at least one side over the receptacle (16) and has there, at least in some regions, a wider cross section than the receptacle (16).

13. The cutting tool as claimed in one of the preceding claims, wherein a first borehole (76) for receiving a first pin (72') of an assembly lever (66) is provided on the holder-side end (30) of the receptacle (16), and a second borehole (78) for receiving a second pin (72, 74) of the assembly lever (66) is provided in the holder (12).

14. The cutting tool as claimed in claim 1, wherein the lower locating face (32) of the arcuate shank (22) comprises a first locating portion (80), which extends over a first angular range (α₁) of the arcuate shank (22) and has a first radius of curvature (r₁₂), and a second locating portion (82), which extends over a second angular range (α₂) of the arcuate shank (22) and has a second radius of curvature (r₁₃), wherein the second radius of curvature (r₁₃) is unequal to the first radius of curvature (r₁₂), and wherein the first radius of curvature (r₁₂) of the first locating portion (80) and the second radius of curvature (r₁₃) of the second locating portion (82) have different center points (53, 53').

15. The cutting tool as claimed in claim 14, wherein the first locating portion (80) passes tangentially into the second locating portion (82).

16. The cutting tool as claimed in claim 14, wherein the second locating portion (82) has a smaller distance from the holder-side end (28) of the shank (22) than the first locating portion (80).

17. The cutting tool as claimed in claim 16, wherein the first radius of curvature (r₁₂) is larger than the second radius of curvature (r₁₃).

18. The cutting tool as claimed in claim 14, wherein the lower bearing surface (36) of the receptacle (16) has a first bearing portion (86), which extends over a first angular range of the arcuate receptacle (16), and has a second bearing portion (88), which extends over a second angular range of the arcuate receptacle (16), wherein the two bearing portions (86, 88) have mutually different radii of curvature (r₁₁, r₃₁) and different centers of curvature (55, 55'), and wherein the first bearing portion (86) is separated from the second bearing portion (88) by a recess (90) provided in the lower bearing surface (36).

19. A cutting insert for a cutting tool (10) as claimed in one of the preceding claims comprising a holder (12) and the cutting insert (14), wherein the holder (12) has a slot-shaped, arcuate receptacle (16) for receiving the cutting insert (14), said receptacle (16) having a lower and an upper bearing surface (36, 38), each of the lower and the upper bearing surface (36, 38) being arranged at a respective rigid clamping jaw (18, 20) of the holder (12), wherein
- the cutting insert (14) has an arcuate shank (22) with a lower and an upper locating face (32, 34), and has a cutting head (24) with cutting edge (26), which cutting head is disposed on a workpiece-side end (44) of the shank (22), wherein the cutting insert is configured for an exchangeable arrangement in the receptacle (16),
- the arcuate shank (22), measured on the lower locating face (32) of the cutting insert (14), extends over at least 90°,
- the shank (22) of the cutting insert (14) extends over a smaller angular range than the receptacle (16) of the holder (12), and
wherein the shank (22) is configured such that it is held in the receptacle (16) in a way that the holder-side end (28) of the shank (22) is distanced from the holder-side end (30) of the receptacle (16).

20. A holder for a cutting tool (10) as claimed in one of claims 1 to 18,
- wherein the holder (12) has a slot-shaped, arcuate receptacle (16) for receiving a cutting insert (14), which has an arcuate shank (22) with a lower and an upper locating face (32, 34) and is equipped with a cutting head (24) with cutting edge (26), which cutting head is disposed on a workpiece-side end (44) of the shank (22), said receptacle (16) of the holder (12) having a lower and an upper bearing surface (36, 38), each of the lower and the upper bearing surface (36, 38) being arranged at a respective rigid clamping jaw (18, 20) of the holder (12),
- wherein the arcuate receptacle (16), measured on the lower bearing surface (32) of the receptacle (16), extends over at least 90°,
- wherein the receptacle (16) extends over a larger angular range than the shank (22) of the cutting insert (14), and
wherein the holder (12) is configured such that the shank (22) is held in the receptacle (16) in a way that the holder-side end (28) of the shank (22) is distanced from the holder-side end (30) of the receptacle (16).

## Revendications

1. Outil d'usinage par enlèvement de copeaux, avec
- un support (12) avec un logement en forme de fente en arc de cercle (16) avec respectivement une face de butée (36, 38) ménagée sur des mâchoires de serrage rigides (18, 20) du support (12) destinées à recevoir (16) un insert de coupe (14) et
- un insert de coupe (14) avec une queue en arc de cercle (22) avec une face d'appui inférieure et supérieure (32, 34), qui est disposé de façon remplaçable dans le logement (16), et avec une tête de coupe (24) avec une arête de coupe (26) disposée à une extrémité côté pièce (44) de la queue (22),
dans lequel le logement en arc de cercle (16) et la queue en arc de cercle (22) s'étendent chaque fois sur au moins 90°, mesurés sur la face de butée inférieure (36) du logement (16) ou sur la face d'appui inférieure (32) de l'insert de coupe (14),
dans lequel le logement (16) s'étend sur une plus grande région angulaire que la queue (22) de l'insert de coupe (14), et
dans lequel la queue (22) est maintenue dans le logement (16), de telle manière que l'extrémité côté support (28) de la queue (22) soit espacée de l'extrémité côté support (30) du logement (16).

2. Outil d'usinage par enlèvement de copeaux selon la revendication 1, dans lequel la face de butée inférieure (36) et la face d'appui inférieure (32) présentent un premier rayon de courbure (r₁₁, r₁₂) de même valeur et/ou dans lequel la face de butée supérieure (38) et la face d'appui supérieure (34) présentent un deuxième rayon de courbure (r₂₁, r₂₂) de même valeur.

3. Outil d'usinage par enlèvement de copeaux selon la revendication 1 ou 2, dans lequel au moins une face de butée (38) du logement (16) est rectiligne dans la région de l'extrémité côté support (30) du logement (16).

4. Outil d'usinage par enlèvement de copeaux selon l'une quelconque des revendications précédentes, dans lequel au moins une face d'appui (34) de la queue (22) est rectiligne dans la région de l'extrémité côté support (28) de la queue (22).

5. Outil d'usinage par enlèvement de copeaux selon l'une quelconque des revendications précédentes, dans lequel le logement (16) se rétrécit dans la région de l'extrémité côté support (30) du logement (16).

6. Outil d'usinage par enlèvement de copeaux selon l'une quelconque des revendications précédentes, dans lequel la queue (22) s'amincit dans la région de l'extrémité côté support (28) de la queue (22).

7. Outil d'usinage par enlèvement de copeaux selon l'une quelconque des revendications précédentes, dans lequel les mâchoires de serrage (18, 20) du support (12) présentent une mâchoire de serrage inférieure (18) s'appliquant sur la face d'appui inférieure (32) de l'insert de coupe (14) et une mâchoire de serrage supérieure (20) s'appliquant sur la face d'appui supérieure (34) de l'insert de coupe (14), dans lequel il est prévu à l'extrémité côté pièce (62) de la mâchoire de serrage inférieure (18) à proximité du logement (16) une saillie (64), qui présente une face d'appui plane (60) comme butée pour la tête de coupe (24).

8. Outil d'usinage par enlèvement de copeaux selon la revendication 2, dans lequel le premier rayon de courbure (r₁₁) de la face de butée inférieure (36) et le premier rayon de courbure (r₁₂) de la face d'appui inférieure (32) présentent des points centraux différents (52', 54') et/ou dans lequel le deuxième rayon de courbure (r₂₁) de la face de butée supérieure (38) et le deuxième rayon de courbure (r₂₂) de la face d'appui supérieure (34) présentent des points centraux différents (52", 54").

9. Outil d'usinage par enlèvement de copeaux selon la revendication 2 ou 8, dans lequel le premier rayon de courbure (r₁₁) de la face de butée inférieure (36) et le deuxième rayon de courbure (r₂₁) de la face de butée supérieure (38) présentent des points centraux différents (54', 54") et/ou dans lequel le premier rayon de courbure (r₁₂) de la face d'appui inférieure (32) et le deuxième rayon de courbure (r₂₂) de la face d'appui supérieure (34) présentent des points centraux différents (52', 52").

10. Outil d'usinage par enlèvement de copeaux selon l'une quelconque des revendications précédentes, dans lequel la tête de coupe (24) est plus large, dans au moins une direction transversale à la direction d'introduction (56) de la queue (22), que la grandeur de l'ouverture du logement (16) dans cette direction.

11. Outil d'usinage par enlèvement de copeaux selon l'une quelconque des revendications précédentes, dans lequel la face de butée inférieure (36) et la face d'appui inférieure (32) présentent un profil de section transversale correspondant et/ou la face de butée supérieure (38) et la face d'appui supérieure (34) présentent un profil de section transversale correspondant.

12. Outil d'usinage par enlèvement de copeaux selon l'une quelconque des revendications précédentes, dans lequel la queue (22) déborde latéralement sur au moins un côté au-delà du logement (16) et y présente au moins localement une section transversale plus large que le logement (16).

13. Outil d'usinage par enlèvement de copeaux selon l'une quelconque des revendications précédentes, dans lequel il est prévu à l'extrémité côté support (30) du logement (16) un premier trou (76) pour l'introduction d'une première broche (72') d'un levier de montage (66) et dans le support (12) un deuxième trou (78) pour l'introduction d'une deuxième broche (72, 74) du levier de montage (66).

14. Outil d'usinage par enlèvement de copeaux selon la revendication 1, dans lequel la face d'appui inférieure (32) de la queue en arc de cercle (22) présente une première partie d'appui (80), qui s'étend sur une première région angulaire (α₁) de la queue en arc de cercle (22) et qui présente un premier rayon de courbure (r₁₂), et une deuxième partie d'appui (82), qui s'étend sur une deuxième région angulaire (α₂) de la queue en arc de cercle (22) et qui présente un deuxième rayon de courbure (r₁₃), dans lequel le deuxième rayon de courbure (r₁₃) est différent du premier rayon de courbure (r₁₂), et dans lequel le premier rayon de courbure (r₁₂) de la première partie d'appui (80) et le deuxième rayon de courbure (r₁₃) de la deuxième partie d'appui (82) ont des points centraux différents (53, 53').

15. Outil d'usinage par enlèvement de copeaux selon la revendication 14, dans lequel la première partie d'appui (80) se prolonge tangentiellement dans la deuxième partie d'appui (82).

16. Outil d'usinage par enlèvement de copeaux selon la revendication 14, dans lequel la deuxième partie d'appui (82) présente une plus petite distance de l'extrémité côté support (28) de la queue (22) que la première partie d'appui (80).

17. Outil d'usinage par enlèvement de copeaux selon la revendication 16, dans lequel le premier rayon de courbure (r₁₂) est plus grand que le deuxième rayon de courbure (r₁₃).

18. Outil d'usinage par enlèvement de copeaux selon la revendication 14, dans lequel la face de butée inférieure (36) du logement (16) présente une première partie de butée (86), qui s'étend sur une première région angulaire du logement en arc de cercle (16), et présente une deuxième partie de butée (88), qui s'étend sur une deuxième région angulaire du logement en arc de cercle (16), dans lequel les deux parties de butée (86, 88) possèdent des rayons de courbure (r₁₁, r₃₁) différents l'un de l'autre et des points centraux (55, 55') différents l'un de l'autre, et dans lequel la première partie de butée (86) est séparée de la deuxième partie de butée (88) par un évidement (90) prévu dans la face de butée inférieure (36).

19. Insert de coupe pour un outil d'usinage par enlèvement de copeaux (10) selon l'une quelconque des revendications précédentes, avec un support (12) et l'insert de coupe (14), dans lequel le support (12) présente un logement (16) en forme de fente en arc de cercle avec respectivement une face de butée inférieure et supérieure (36, 38) ménagée sur des mâchoires de serrage rigides (18, 20) du support (12) destinées à recevoir l'insert de coupe (14),
dans lequel
- l'insert de coupe (14) présente une queue en arc de cercle (22) avec une face d'appui inférieure et une face d'appui supérieure (32, 34), est configuré en vue d'un agencement remplaçable dans le logement (16), et présente une tête de coupe (24) avec une arête de coupe (26) disposée à une extrémité côté pièce (44) de la queue (22),
- la queue en arc de cercle (22) s'étend sur au moins 90°, mesurés sur la face d'appui inférieure (32) de l'insert de coupe (14),
- la queue (22) de l'insert de coupe (14) s'étend sur une plus petite région angulaire que le logement (16) du support (12), et
dans lequel la queue (22) est configurée pour être maintenue dans le logement (16) de telle manière que l'extrémité côté support (28) de la queue (22) soit espacée de l'extrémité côté support (30) du logement (16).

20. Support pour un outil d'usinage par enlèvement de copeaux (10) selon l'une quelconque des revendications 1 à 18,
- dans lequel le support (12) présente un logement (16) en forme de fente en arc de cercle avec respectivement une face de butée inférieure et supérieure (36, 38) ménagée sur des mâchoires de serrage rigides (18, 20) du support (12) destinées à recevoir un insert de coupe (14), qui présente une queue en arc de cercle (22) avec une face d'appui inférieure et une face d'appui supérieure (32, 34) et qui est équipé d'une tête de coupe (24) avec une arête de coupe (26) disposée à une extrémité côté pièce (44) de la queue (22),
- dans lequel le logement en arc de cercle (16) s'étend sur au moins 90°, mesurés sur la face de butée inférieure (32) du logement (16),
- dans lequel le logement (16) s'étend sur une plus grande région angulaire que la queue (22) de l'insert de coupe (14), et
dans lequel le support (12) est configuré pour que la queue (22) soit maintenue dans le logement (16) de telle manière que l'extrémité côté support (28) de la queue (22) soit espacée de l'extrémité côté support (30) du logement (16).
